# EUROPEAN PATENT APPLICATION

(11) **EP 3 010 245 A2**
(43) Date of publication of application: **20.04.2016**
(21) Application number: 15189962.2
(22) Date of filing: 15.10.2015
(51) Int. Cl.: H04N 21/8352, H04N 21/44, H04N 21/8358, H04N 21/2662, H04N 21/258, H04N 21/462, H04N 21/4722

(54) **METHOD FOR PROVIDING ADDITIONAL INFORMATION RELATED TO BROADCAST CONTENT AND ELECTRONIC DEVICE IMPLEMENTING THE SAME**

(30) Priority: 16.10.2014 KR 20140139970
(71) Applicant: Samsung Electronics Co., Ltd., Gyeonggi-do 16677 (KR)
(72) Inventor: Kim, Dongkwang, 16677 Suwon-si (KR); Lee, Sangmyoung, 16677 Suwon-si (KR); Lim, Hyunmin, 16677 Suwon-si (KR); Jeong, Sangheon, 16677 Suwon-si (KR); An, Yeonhwa, 16677 Suwon-si (KR)
(74) Representative: Nederlandsch Octrooibureau

(57) **Abstract**

Provided herein is a method for providing information by an electronic device. The method can include transmitting identification information of broadcasting content and feature information of the electronic device to an external device; receiving, from the external device, additional information related to the identification information and the feature information; and displaying the additional information together with the broadcasting content.

## Description

### TECHNICAL FIELD

Embodiments of the present disclosure relates to an electronic device for providing broadcast content and additional information related thereto, an electronic device implementing a function related to the broadcast content in connection with the aforementioned electronic device, and a method for operating the electronic device.

### BACKGROUND

An electronic device includes an element for receiving broadcast content (e.g., a TV program, a broadcasting advertisement, etc.) and providing the same for users. The electronic device further includes an element for recognizing broadcast content (e.g., a broadcasting advertisement or a PPL (product placement) appearing in a TV program), acquiring additional information (e.g., a banner advertisement) related to the recognized broadcast content and providing the acquired additional information.

### SUMMARY

Additional information can be displayed along with corresponding broadcast content. For example, a banner advertisement can be displayed, overlapping a part of a broadcasting advertisement or TV program. Some views may pay attention to such banner advertisements. Since the banner advertisement is given a short exposure time (display time) and a exposure area (display area) narrowed than the main area (for a broadcasting advertisement or TV program), the banner advertisement is difficult to contain detailed information. To address the above-discussed deficiencies, it is a primary object to provide users with detailed information to enhance advertising effect.

Viewers may have a common interest in a certain subject (e.g., automobiles). However, some of the viewers may feel drawn to banner advertisements, while some others may feel indifferent to banner advertisements. For example, a viewer who enjoys camping may pay more attention to an automobile advertisement if the background of the automobile advertisement is a campground image or the banner introduces an event related to camping. On the other hand, a viewer who has gone camping may be relatively indifferent to the automobile advertisement. Accordingly, there is a need for a method to selectively provide users with advertisements according to specific conditions (e.g., areas, generations, etc.) in order to enhance advertising effect.

The present disclosure is provided to solve the above problems and aims to provide a method to solve the above problems and an electronic device implementing the. The present disclosure also aims to provide a method for enabling viewers to interact with devices through additional information rather than unilaterally providing information and an electronic device implementing the same.

In accordance with an aspect of the present disclosure, a method for providing information by an electronic device is provided. The method includes: transmitting identification information of broadcasting content and feature information of the electronic device to an external device; receiving, from the external device, additional information related to the identification information and the feature information; and displaying the additional information together with the broadcasting content.

In accordance with another aspect of the present disclosure, a method for providing information by an electronic device is provided. The method includes: receiving identification information of broadcasting content and feature information of an external device from the external device; acquiring at least one additional information item related to the identification information; selecting an additional information item having a targeting condition satisfying the feature information from among the at least one acquired additional information item; and transmitting the selected additional information item to the external device.

In accordance with another aspect of the present disclosure, an electronic device is provided. The electronic device includes: a communication unit configured to communicate with an external device; a extraction unit configured to extract a fingerprint from broadcasting content displayed or prepared to be displayed; a content recognition unit configured to check a fingerprint coinciding with the extracted fingerprint in a database and configured to acquire identification information of the broadcasting content corresponding to the checked fingerprint; a display controller configured to control transmitting the identification information and feature information of the electronic device to the external device via the communication unit, configured to control receiving additional information related to the identification information and the feature information from the external device via the communication unit and configured to control displaying the additional information together with the broadcasting content.

In accordance with another aspect of the present disclosure, an electronic device is provided. The electronic device includes: a communication unit configured to communicate with an external device; and an information provision unit configured to: receive identification information of the external device and feature information of the external device from the external device, to acquire at least one additional information item related to the identification information from a database, to select an additional information item having a targeting condition satisfying the feature information from among the at least one acquired additional information and to transmit the selected additional information to the external device via the communication unit.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram of a network of a system for services related to broadcasting according to embodiments of the present disclosure;
FIG. 2 is a block diagram of an electronic device according to embodiments of the present disclosure;
FIG. 3 is a flowchart illustrating a method for registering a fingerprint in a client according to various embodiments of the present disclosure;
FIG. 4 is a flowchart illustrating a method for configuring feature information of a client according to various embodiments of the present disclosure;
FIG. 5 is a flowchart illustrating a method for providing additional information based on a local fingerprint DB according to various embodiments of the present disclosure;
FIG. 6 is a flowchart illustrating a method for providing additional information based on a local fingerprint DB and a local additional information DB according to various embodiments of the present disclosure;
FIG. 7 is a flowchart illustrating a method for providing additional information when broadcast content is unrecognizable, according to various embodiments of the present disclosure;
FIG. 8 is a flowchart illustrating a method for a method for remotely providing additional information according to various embodiments of the present disclosure;
FIG. 9 is a flowchart illustrating a method for providing additional information based on connection between devices according to various embodiments of the present disclosure;
FIGS. 10A, 10B and 10C show screens illustrating a purchase method using a multi-screen;
FIGS. 11A, 11B and 11C show screens illustrating a method for downloading and executing an application using a multi-screen;
FIGS. 12A, 12B and 12C show screens illustrating a method for downloading a coupon using a multi-screen;
FIG. 13 shows a screen illustrating a method for providing an additional service by utilizing a pointer of a remote control;
FIG. 14 shows a screen illustrating a method for providing an additional service by utilizing gesture recognition;
FIG. 15 shows a screen illustrating a method for providing an additional service by utilizing voice recognition;
FIG. 16 shows a screen illustrating a method for providing an additional service by utilizing object recognition;
FIG. 17 is a flowchart illustrating a method for providing supplementary information without connection between devices according to various embodiments of the present disclosure;
FIGS. 18A and 18B show screens illustrating a method for providing an additional service using participation-type onscreen;
FIGS. 19A, 19B and 19C show screens illustrating a method for providing an additional service using non-participation-type onscreen;
FIG. 20 is a flowchart illustrating a method for providing user content according to various embodiments of the present disclosure;
FIGS. 21A, 21B, 21C and 21D show screens illustrating a method for providing additional services using participation-type onscreen;
FIG. 22 is a flowchart illustrating a method for providing user content using Social Network Service (SNS) according to various embodiments of the present disclosure;
FIGS. 23A, 23B, 23C and 23D show screens illustrating a method for providing additional services using participation-type onscreen;
FIG. 24 is a flowchart illustrating a method for providing a broadcasting advertisement service according to various embodiments of the present disclosure; and
FIG. 25 is a flowchart illustrating a method for providing additional information when recognition of broadcast content is delayed, according to various embodiments of the present disclosure.

### DETAILED DESCRIPTION

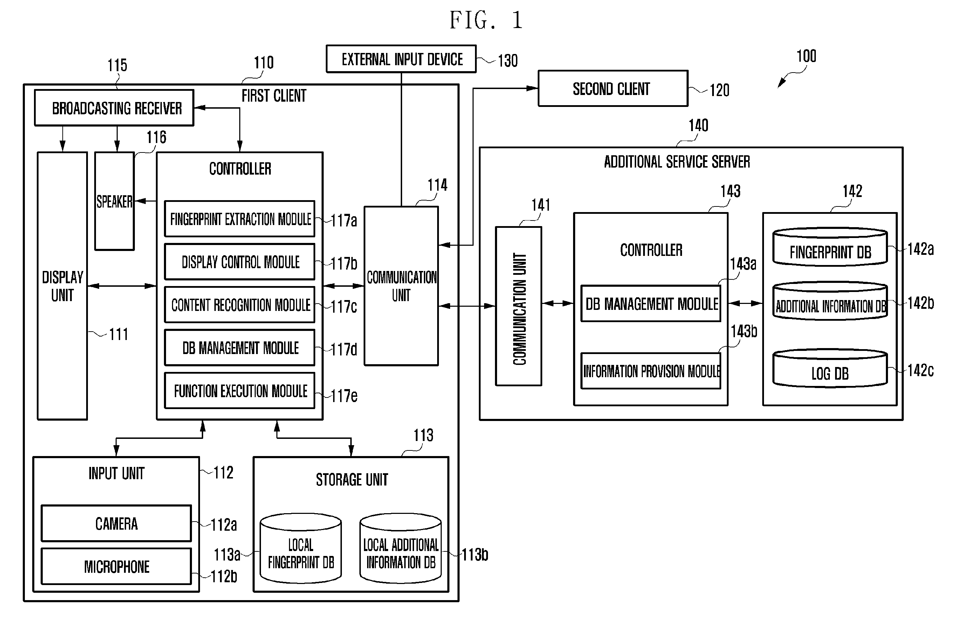

FIGURES 1 through 25, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device or system. Hereinafter, various embodiments of the present disclosure are described in detail with reference to the accompanying drawings. However, it should be apparent to those skilled in the art that the following description of various embodiments of the present disclosure is provided for illustrative purpose only and not for the purpose of limiting the present disclosure. Those skilled in the art will understand that various changes and modifications of the various embodiments described herein can be made without departing from the scope and spirit of the present disclosure. Thus, it is intended that the present disclosure cover the modifications and variations of this disclosure provided they come within the scope of the appended claims and their equivalents. The same reference symbols are used throughout the drawings to refer to the same or like parts.

The expressions such as "include" and "can include" which can be used in various embodiments of the present disclosure denote presence of the disclosed functions, operations, and constituent elements and do not limit one or more additional functions, operations, and constituent elements. In various embodiments of the present disclosure, the terms such as "include" or" "have" can be construed to denote a certain characteristic, number, step, operation, constituent element, component or a combination thereof, but may not be construed to exclude existence of or a possibility of addition of one or more other characteristics, numbers, steps, operations, constituent elements, components or combinations thereof.

In various embodiments of the present disclosure, the expression "and/or" includes any and all combinations of the associated listed words. For example, the expression "A and/or B" can include A, can include B, or can include both A and B.

In various embodiments of the present disclosure, expressions including ordinal numbers, such as "first" and "second," and/or the like, can modify various elements. However, such elements are not limited by the above expressions. For example, the above expressions do not limit the sequence and/or importance of the elements. The above expressions are used merely for the purpose to distinguish an element from the other elements. For example, a first element could be termed a second element, and similarly, a second element could be also termed a first element without departing from the scope of the present disclosure.

The terms and words used in the following description of various embodiments of the present disclosure are not limited to the bibliographical meanings, but, are merely used by the inventor to enable clear and consistent understanding of the present disclosure. It is to be understood that the singular forms "a," "an," and "the" include plural referents unless the context clearly dictates otherwise.

Unless defined otherwise, all technical and scientific terms used herein have the same meaning as commonly understood by those skilled in the art to which various embodiments of the present disclosure described herein belong. It will be further understood that terms used herein should be interpreted as having a meaning that is consistent with their meaning in the context of this specification and the relevant art and will not be interpreted in an idealized or overly formal sense unless expressly so defined herein.

An electronic device according to various embodiments of the present disclosure can have at least one of a broadcasting reception function and a communication function. For example, the electronic device includes at least one of a smartphone, a tablet Personal Computer (PC), a mobile phone, a video phone, an e-book reader, a desktop PC, a laptop PC, a netbook computer, a Personal Digital Assistant (PDA), a Portable Multimedia Player (PMP), a digital audio player, a mobile medical device, a camera and a wearable device (e.g., a head-mounted-device(HMD) such as electronic glasses, electronic clothing, an electronic bracelet, an electronic necklace, an electronic accessory, an electronic tattoo, a smartwatch).

According to embodiments, the electronic device can be a smart home appliance having at least one of a broadcasting reception function and a communication function. The smart home appliance can include, for example, a TeleVision (TV), a Digital Video Disk (DVD) player, an audio device, a refrigerator, an air-conditioner, a vacuum cleaner, an oven, a microwave, a washing machine, an air cleaner, a set-top box, a TV box (e.g., SAMSUNG HOMESYNC™, APPLE TV®, or GOOGLE T®), a game console, an electronic dictionary, an electronic key, a camcorder, and an electronic picture frame.

According to embodiments, the electronic device includes various medical devices (e.g., e.g., Magnetic Resonance Angiography (MRA), Magnetic Resonance Imaging (MRI), Computed Tomography (CT), a scanning machine, an ultrasonic wave device, and/or the like), a navigation device, a Global Positioning System (GPS) receiver, an Event Data Recorder (EDR), a Flight Data Recorder (FDR), an automobile infotainment device, electronic equipment for a ship (e.g., a navigation system for a ship, a gyrocompass, and/or the like), avionics, a security device, a vehicular head unit, an industrial or domestic robot, AN automatic teller's machine (ATM) of a financial institution and a Point Of Sales (POS) of a store.

According to embodiments, the electronic device includes at least one of furniture or a portion of a building/structure that has at least one of a broadcasting reception function and a communication function, an electronic board, an electronic signature receiving device, a projector, various measurement devices (e.g., water, electricity, gas and radio measurement devices). According to embodiments of the present disclosure the electronic device can correspond to a combination of at least one of the aforementioned devices. According to embodiments of the present disclosure, the electronic device can be a flexible device. According to embodiments of the present disclosure, it is apparent to those skilled in the art that the electronic device is limited to the aforementioned devices.

The term "screen" used in various embodiments can represent the screen of a display unit. For example, in the expressions such as "broadcasting content is displayed on the screen", "the display unit displays broadcasting content on the screen" or "the controller controls the display unit to display the broadcasting content on the screen", the screen is used as the "screen of the display unit". Meanwhile, the term "screen" can represent an object to be displayed on the display unit. For example, in the expressions such as "a broadcasting screen is displayed", "the display unit displays a broadcasting screen" or "the controller controls the display unit to display a broadcasting screen", the screen is used as an object to be displayed.

In various embodiments, a client, a server and an external device are electronic devices having at least one of a broadcasting reception function and a communication function. Herein, the term "external" simply means an electronic device from the point of view of a certain electronic device, and should be understood as not limiting the functionality or operation of the device. In addition, the terms "client" and "server" simply means making a request for certain information and providing the information in response from relative points of view, and should be understood as not limiting the functionality or operation of the device.

Hereinafter, various embodiments of the present disclosure with reference to the accompanying drawings.

FIG. 1 is a block diagram of a network of a system for services related to broadcasting according to embodiments of the present disclosure.

Referring FIG. 1, according to embodiments of the present disclosure, a system 100 includes a first client 110, a second client 120, an external input device 130 and an additional service server 140.

The first client 110 includes a display unit 111, an input unit 112, a storage unit 113, a communication unit 114, a broadcasting receiver 115, a speaker 116 and a controller 117.

The display unit 111 displays various data under control of the controller 117. The display unit 111 includes a display panel or a hologram. The display panel can be, for example, a liquid-crystal display (LCD) or an active-matrix organic light-emitting diode (AM-OLED). The display panel can be implemented to be, for example, flexible, transparent or wearable. The hologram projects a stereoscopic image in the air using interference of light. According to an embodiment, the display unit 111 can be a separate device separated from the first client 110. For example, the display unit 111 and the first client 110 can be a TV and a set-top box which are connected to each other through an interface (e.g., a high definition multimedia interface (HDMI).

The input unit 112 receives a user input and delivers the same to the controller 117. For example, the input unit 112 includes a camera 112a and a microphone 112b. The camera 112a captures a still image or a moving image according to a user input and delivers the same to the controller 117. According to an embodiment, the camera 112a includes at least one image sensor, at least one lens, at least one image signal processor (ISP) and at least one flash (e.g., an LED or xenon lamp). The microphone 112b converts a sound wave (user input) into an audio signal and delivers the same to the controller 117. The input unit 112 further includes a keypad or a touch panel installed on the screen.

The storage unit 113 stores data generated by the first client 110 (e.g., user content generated through the microphone 112b or the camera 112a) or data received from an external device through the communication unit 114 (e.g., information related to broadcasting content). According to an embodiment, the storage unit 113 includes a local fingerprint DB 113a. The fingerprint, which is information for identifying broadcasting content, can also be referred to as an identifier or identification information. The local fingerprint DB 113a includes a content identification (ID) and at least one corresponding fingerprint for each piece of broadcasting content. A moving image includes multiple frames (e.g., 60 frames/sec). Accordingly, a fingerprint for each frame can be present in the local fingerprint DB 113a. Additionally, in one moving image, fingerprints can be distinguished from each other by identification information (e.g., offset). For example, a fingerprint assigned offset '1' can indicate a frame of the moving image that is displayed first in order, and a fingerprint assigned offset '10' can indicate a frame of the moving image that is displayed tenth in order.

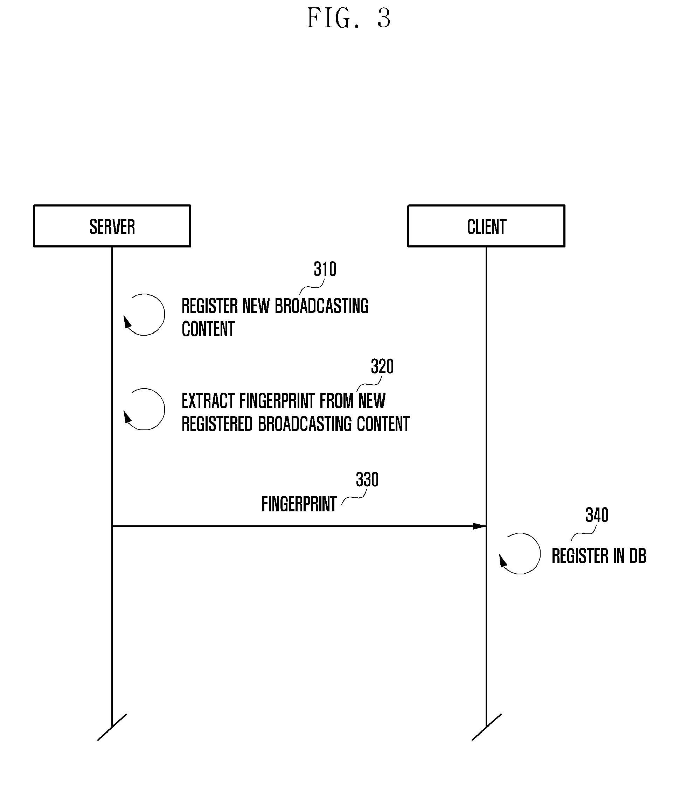

The storage unit 113 further includes a local additional information DB 113b. The local additional information DB 113b includes a list of at least one additional information item for each content ID. The local additional information DB 113b further includes a targeting condition for each additional information item. One of multiple additional information items can be selected based on the targeting condition (for example, when a viewer of the broadcasting content is recognized as a woman in her 30s, an additional information item having 'woman in her 30s' as the targeting condition can be selected from among additional information items), and displayed together with the corresponding broadcasting content. Alternatively, multiple additional information items can be selected based on the targeting condition. In this case, the selected additional information items can be displayed sequentially or simultaneously. A method for displaying additional information based on the targeting condition will be described in detail below with reference to FIGS. 3 to 8.

According to an embodiment, the DBs 113a and 113b are integrated into one DB. For example, the integrated DB can include a content ID, at least one fingerprint and at least one additional information item for each piece of broadcasting content.

The storage unit 113 can additionally store various kinds of information (e.g., phone number, ages, hobby, address, job, photo, and the like) related to the user of the first client 110. Further, information on each user can be stored the storage unit 113. Such user information can be used to select additional information. For example, the first client 110 can recognize a user that is using first client (e.g., watching TV). An additional information item having a targeting condition satisfying information on the recognized user (e.g., the user watching TV is a man in his 30s) can be selected as additional information to be displayed from among additional information items. In addition, the user information can be used to provide additional information (e.g., detailed information on the additional information) to an external device. For example, when a user response (i.e., a request for transmission of information) to the displayed additional information is recognized, the first client 110 can determine an external device to receive the information based on the user information (e.g., phone number), and transmit additional information to the determined external device (e.g., the second client 120).

The storage unit 113 can store a program to support the controller 117 such that the controller 117 can perform fingerprint extraction, content recognition, data base management and a function related to additional information.

The communication unit 114 can establish connection to an external device (e.g., the second client 120 or the additional service server 140) over a network (e.g., a mobile communication network (e.g., LTE), a wireless or wired LAN, and the like) and perform data communication with the connected external device under control of the controller 117. Alternatively, the communication unit 114 can establish direct connection to an external device using a peer to peer connection scheme (e.g., Wi-Fi Direct, BLUETOOTH®, and the like) without assistance from a medium (e.g., an access point (AP)) and perform data communication with the connected external device.

The broadcasting receiver 115 can receive broadcasting content under control of the controller 117, classify the content into images and audio and deliver the images and audio to the display unit 111 and the speaker 116. The broadcasting receiver 115 includes a module for receiving terrestrial broadcasting, satellite broadcasting, a cable TV service, or an internet protocol television (IPTV) broadcasting.

The speaker 116 coverts an audio signal received from the controller 117 or the broadcasting receiver 115 into a sound wave and outputs the sound wave.

The controller 117 controls overall operation of the first client 110 and signal flow between internal constituents of the first client 110, and processes data. The controller 117 can include a fingerprint extraction module 117a and a display control module 117b.

The fingerprint extraction module 117a extracts a fingerprint from the broadcasting content. Herein, the broadcasting content can be prepared to be displayed or being displayed through the display unit 111. The extraction process includes, for example, converting at least one frame of a moving image into a character string (fingerprint) and designating an offset for the character string based on the sequential position of the frame.

The display control module 117b transmits an additional information request message (including at least one extracted fingerprint and each offset) to the additional service server 140 via the communication unit 114. The additional information request message includes feature information on the client, for example, device information on the first client 110, position information on the first client 110, connection status information indicting connection to a user device (e.g., the second client 120) and user information.

The device information includes information indicating the type of the device (e.g., a smartphone, a TV, etc.), a production year, and information indicating the type and performance of an installed constituent (hardware, software).

The position information includes at least one of latitude and longitude information, geographical address information (e.g., 416, Maetan 3-dong, Yeongtong-gu, Suwon-si, Gyeonggi-do, Korea) and information related to the geographical address. Herein, the information related to the geographical address includes at least one of information on a building positioned at (or near) a geographical address (e.g., a building name, a café name, a city hall name, a department store name, etc.), structure information (e.g., a tunnel name, a mountain name, a cell ID of a base station, etc.), an Internet IP address corresponding to the geographical address, and a phone number corresponding to the geographical address. The position information also includes various kinds of information irrelevant to the geographical address (e.g., speed information, automobile identification information and the like related to a transportation means). The display control module 117b can receive a response message (including additional information from the additional service server 140) via the communication unit 114, and control the display unit 111 to display the additional information and the corresponding broadcasting content simultaneously.

The user information can be information on a user that is using the first client 110 (e.g., watching TV) among users registered in the first client 110. The first client 110 can recognize the user that is using the first client 110 in various ways. For example, the first client 110 can be connected to an external device (e.g., the second client 120). Accordingly, the controller 170 of the first client 110 can be aware of the user of the second client 120 through information (e.g., phone number, name, etc.) received from the second client 120, and recognize that the user of the second client 120 is using the first client 110. As another example, the controller 170 can recognize the user that is using the first client 110 by capturing an image by driving the camera 112a, extracting feature information related to human features (e.g., face, eyes, iris, or the like) from the capture image and comparing the feature information with pre-stored user information. As another example, the controller 170 can recognize the user that is using the first client 110 by collecting voice data by driving the microphone 112, extracting voice feature information (e.g., frequency, tone, etc.) from the voice data and comparing the extraction voice feature information with pre-stored feature information.

According to an embodiment, content recognition can be performed by a server in place of the client. To this end, the controller 117 further includes a content recognition module 117c. The content recognition module 117c checks a fingerprint coinciding with the extracted fingerprint in the local fingerprint DB 113a, and acquires a content ID corresponding to the checked fingerprint from the local fingerprint DB 113a. The display control module 117b transmits an additional information request message (including the acquired content ID) to the additional service server 140 via the communication unit 114. Herein, the additional information request message further contains feature information on a client. The display control module 117b receives a response message (including additional information) the additional service server 140 via the communication unit 114, and control the display unit 111 to display the additional information and corresponding broadcasting content together.

According to an embodiment, the client acquires additional information from a DB (e.g., the local additional information DB 113b) provided in the client. The display control module 117b acquires additional information corresponding to the acquired content ID from the DB 113b, and control the display unit 111 to display the additional information.

The controller 117 further includes a DB management module 117d. The DB management module 117d can periodically transmit an updated request message for a fingerprint to an external device (e.g., the additional service server 140) via the communication unit 114. The DB management module 117d can manage the local fingerprint DB 113a using a response message received from the external device.

For example, the response message can include a new broadcast list (including information on at least one piece of new broadcasting content, a "content ID and fingerprint"). Thereby, the DB management module 117d can register the new broadcast list in the DB 113a.

A part of the broadcasting content (e.g., some of the frames of a moving image) can be replaced. Accordingly, a fingerprint corresponding to the replaced part needs to be modified. In this case, the response message includes a fingerprint replacement list (including a new fingerprint for at least one content ID). Thereby, the DB management module 117d can replace an existing fingerprint with a new fingerprint in the local fingerprint DB 113a.

The response message includes a broadcasting termination list. Thereby, the DB management module 117d searches the local fingerprint DB 113a for a content ID coinciding with the content ID included in the broadcasting termination list, and deletes the searched content ID and a corresponding fingerprint from the DB 113a.

The DB management module 117d periodically transmits an update request message for the additional information and an external device (e.g., the additional service server 140) via the communication unit 114. The DB management module 117d manages the local additional information DB 113b using a response message received from the external device.

For example, the response message can include a new additional information list having at least one new additional information item and a content ID related thereto. Thereby, the DB management module 117d can check if a content ID coinciding with the received content ID is present in the local additional information DB 113b. If the coinciding content ID is present, the DB management module 117d can register the received new additional information in the local additional information DB 113b such that that the new additional information corresponds to the content ID. If the coinciding content ID is not present, the DB management module 117d registers the new additional information and the received content ID in the DB 113b since the broadcasting content is new content in view of the first client 110.

The broadcasting content remains constant while additional information is replaced with new one. In this case, the response message includes an additional information replacement list (including new additional information for a content ID). Thereby, the DB management module 117d replaces the existing additional information with new additional information in the local additional information DB 113b.

The response message includes an additional information service termination list. Thereby, the DB management module 117d searches the local additional information DB 113b for a content ID coinciding with a content ID included in the list, and delete the searched content ID and corresponding additional information from the DB 113b.

According to an embodiment, the DB management module 117d makes a request for fingerprint update and a request for additional information update simultaneously. For example, the DB management module 117d can periodically transmit an update request message for a fingerprint and additional information to an external device (e.g., the additional service server 140) via the communication unit 114.

According to an embodiment, the DB management module 117d receives a push message containing update information on at least one of the fingerprint and the additional information from an external device (e.g., the additional service server 140) via the communication unit 114. The DB management module 117d manages the DBs 113a and 113b based on the push message.

The controller 117 further includes a function execution module 117e for performing a function related to the additional information in response to a user input for the additional information. Herein, the user input can be an input received from the input unit 112. Alternatively, the user input can be an input received from an external device (e.g., the external input device 130) via the communication unit 114.

The function execution module 117e transmits supplementary information related to the additional information to another device (e.g., the second client 120) of the user via the communication unit 114 in response to the user input.

The function execution module 117e transmits information related to another device of the user to the server via the communication unit 114 in response to the user input. Herein, the server can be the additional service server 140 or a separate server for providing additional information related to broadcasting content.

The function execution module 117e controls a certain constituent (e.g., the camera 112a and the microphone 112b) to generate user content in response to a user input and to transmit the generated user content to the server(e.g., the additional service server 140)via the communication unit 114.

The function execution module 117e collects log information and transmits the same to the additional service server 140 via the communication unit 114.

The log information includes information indicating a pattern in which a user uses the first client 110. The pattern information includes information on favorite services among services (e.g., web surfing, TV replay, movies, animation, etc.) provided by the first client 110, information indicating types of favorite applications, and information indicating time when the user usually uses the client 110.

The log information further includes information indicating watching history of broadcasting content, information indicating whether the user responded to additional information, and the number of exposures of the additional information.

The second client 120 performs a function related to the additional information in operative connection with the first client 110.

The external input device 130, which is intended to provide a user input to the first client 110, can be, for example, a TV remote control. According to an embodiment, the second client 120 transmits the user input to the first client 110.

The additional service server 140 includes a communication unit 141, a database (DB) 142 and a controller 143.

The communication unit 141 performs data communication with an external device over a network (e.g., a mobile communication network (e.g., LTE), a wireless or wired LAN, etc.) under control of the controller 143.

The database 142 includes a fingerprint DB 142a, an additional information DB 142b and a log DB 142c.

The controller 143 controls overall operation of the server 140 and signal flow between internal constituents of the server 140, and processes data. The controller 143 includes a DB management module 143a and an information provision module 143b.

The DB management module 143a receives a request for registration of a fingerprint from an external device (e.g., a broadcasting content provision server) via the communication unit 141. The DB management module 143a configures a content ID for broadcasting content included in the registration request.

The DB management module 143a extracts the fingerprint from the broadcasting content and configure identification information (e.g., offset) for identifying the extracted fingerprint. According to an embodiment, the registration request includes a content ID, a fingerprint and an offset in place of the broadcasting content. The DB management module 143a registers the content ID, the fingerprint and the offset in the fingerprint DB 142a.

The DB management module 143a receives a request for modification of the fingerprint from an external device via the communication unit 141. The modification request includes a content ID, a fingerprint and an offset. The DB management module 143a searches the fingerprint DB 142a for a content ID coinciding with the received content ID, and replaces (modify) a fingerprint of the searched content ID corresponding to the received offset with the received fingerprint.

The DB management module 143a receives a request for deletion of the fingerprint (including the content ID) from an external device via the communication unit 141. The DB management module 143a searches the fingerprint DB 142a for a content ID coinciding with the received content ID, and deletes the searched content ID and a corresponding fingerprint from the DB 142a.

The DB management module 143a can receive a request for registration of additional information from an external device via the communication unit 141. The registration request includes additional information and an ID of broadcasting content related thereto. The DB management module 143a searches the additional information DB 142b for a content ID coinciding with the received content ID, and adds the received additional information in the searched content ID list. If a content ID coinciding with the received content ID is not present in the additional information DB 142b, the DB management module 143a can newly register the content ID in the additional information DB 142b and add the received additional information in the list of newly registered content IDs. According to an embodiment, the registration request further includes a targeting condition for the additional information. Thereby, the DB management module 143a can register the targeting condition in the DB 142b as an option to the added additional information.

The DB management module 143a receives a request for modification of the additional information from an external device via the communication unit 141. The modification request includes a content ID and additional information. The DB management module 143a searches the additional information DB 142b for a content ID coinciding with the received content ID, and replaces the existing additional information with the received additional information in the list of searched content IDs. The modification request further includes a targeting condition for the additional information. Thereby, the DB management module 143a registers the targeting condition in the DB 142b as an option to the additional information.

The DB management module 143a receives a request for deletion of additional information (including a content ID) from an external device via the communication unit 141. The DB management module 143a searches the additional information DB 142b for a content ID coinciding with the received content ID, and deletes the searched content ID and corresponding additional information from the DB 142b.

The DB management module 143a receives log information from a client (e.g., the first client 110) via the communication unit 141 and registers the received log information in the log DB 142c.

The information provision module 143b receives an additional information request message from a client, for example, the first client 110 via the communication unit 114.

According to an embodiment, the additional information request message includes a fingerprint and an offset. The information provision module 143b performs content recognition first. For example, the information provision module 143b searches the DB 142a for a fingerprint coinciding with the received fingerprint. If the offset of the searched fingerprint coincides with the received offset, the information provision module 143b checks the searched fingerprint in the DB 142a. Next, the information provision module 143b searches the additional information DB 142b for a content ID coinciding with the recognized (i.e., checked) content ID and acquire additional information corresponding to the searched content ID from the DB 142b. Next, the information provision module 143b transmits the acquired additional information to the first client via the communication unit 141. The additional information request message further includes feature information (e.g., the viewer is 'a woman in her 30s') of the corresponding client. Thereby, the information provision module 143b can select "an additional information item having targeting condition satisfying the feature information" from among the acquired additional information items, and transmit the selected additional information to the first client 110 via the communication unit 141.

According to an embodiment, the additional information request message includes a content ID. That is, the information provision module 143b searches the additional information DB 142b for a content ID coinciding with the received content ID and acquires additional information corresponding to the searched content ID from the DB 142b. Next, the information provision module 143b transmits the acquired additional information to the first client 110 via the communication unit 141. The additional information request message further includes feature information on the client. Thereby, the information provision module 143b can select an additional information item having a targeting condition satisfying the feature information from among the acquired additional information items and transmit the selected additional information to the first client 110 via the communication unit 141.

The information provision module 143b receives an update request message for a fingerprint a client (e.g., the first client 110 having local fingerprint DB 113a) via the communication unit 114. In response to the update request, the information provision module 143b searches a fingerprint list that is newly registered, modified or deleted in the fingerprint DB 142a and transmits the searched fingerprint list to the first client 110 via the communication unit 141. According to an embodiment, if the fingerprint DB 142a is updated without the update request, the information provision module 143b transmits the updated fingerprint list to the first client 110 via the communication unit 141.

The information provision module 143b receives an update request message for additional information from a client (e.g., the first client 110 having the local additional information DB 113b) via the communication unit 114. The additional the information provision module 143b searches an additional information list that is newly registered, modified or deleted in the additional information DB 142b and transmits the searched additional information list to the first client 110 via the communication unit 141. According to an embodiment, if the additional information DB 142b is updated without the update request, the information provision module 143b transmits the updated fingerprint list to the first client 110 via the communication unit 141.

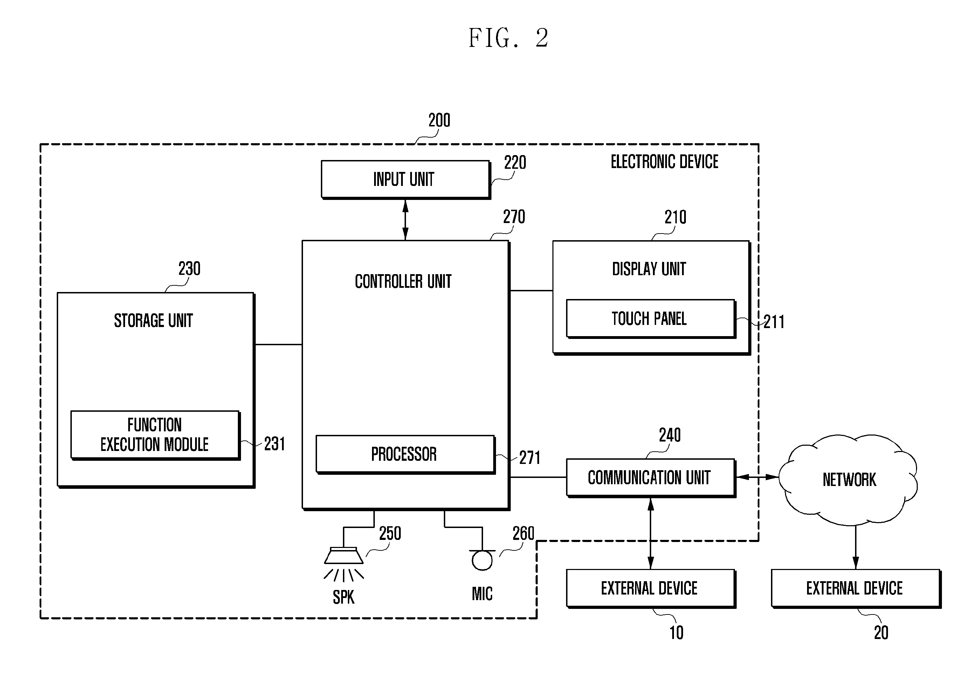

FIG. 2 is a block diagram of an electronic device according to various embodiments of the present disclosure.

Referring FIG. 2, an electronic device 200 (e.g., the second client 120) includes a display unit 210, an input unit 220, a storage unit 230, a communication unit 240, a speaker 250, a microphone 260 and a controller 270.

The display unit 210 displays various kinds of information under control of the controller 270. The display unit 210 includes a display panel or a hologram. The display panel includes "a touch panel 211", which is an input unit for interaction between the user and the electronic device 200. In this case, the display unit 210 can also be referred to as a touchscreen.

The touch panel 211 can be implemented as an add-on type panel, which is disposed on the screen of the display unit 210, or an on-cell type or in-cell type panel, which is inserted in the display unit 210. The touch panel 211 can sense a user input in at least one of manners including, for example, capacitive sensing, resistive sensing, infrared sensing and ultrasonic sensing, generate an event corresponding to the user input and delver the generated event to the controller 270. The touch panel 211 senses a gesture of a conductive object (e.g., a finger or a stylus pen) which directly contact the screen or is proximate to or hovering over the screen within a distance at which the conductive object can be sensed by the touch panel 211. The touch panel 211 generates an event corresponding to the gestures and delivers the same to the controller 170.

The input unit 220, which is different from the touch panel 211 installed in the display unit 210, includes, for example, a touch key. The touch key recognizes touch or approach of a human body or an object. The input unit 220 generates an event in response to a user input and transmits the same to the controller 270. The input unit 220 further includes a key (e.g., a dome key) operating in a manner different from the touch manner. For example, when the user pressed down the dome key, the dome key is transformed, contacting a printed circuit board. Thereby, an event can be generated by the printed circuit board and delivered to the controller 270.

The storage unit 230 stores data that is generated by the electronic device 200 or received from an external device via the communication unit 240 under control of the controller 270. In addition, the storage unit 230 stores a booting program, at least one operating system, and applications. The storage unit 230 can include a main memory and a secondary memory. The main memory can be implemented through, for example, a RAM. The secondary memory can be implemented through a disk, a RAM, a ROM or a flash memory. The main memory can store various programs loaded from the secondary memory such as, for example, a booting program, operating system (e.g., kernel), middleware, Application Programming Interface (API) and an application. When power is supplied to the controller 270 from a battery, the booting program can be loaded onto the main memory first. The booting program can load the operating system onto the main memory. The operating system can load an application onto the main memory. The controller 270 can interpret a command (routine) of a program by accessing the main memory and perform a function according to the result of interpretation. The storage unit 230 can further include an external memory. For example, the storage unit 230 can include a CF (compact flash), an SD (secure digital), a Micro-SD (micro secure digital), a Mini-SD (mini secure digital), an xD (extreme digital) or a MemoryStick as the external memory.

The storage unit 230 stores a function execution module 231. The function execution module 231 can be configured such that the electronic device 200 performs a function related to additional information in operative connection with another device (e.g., the first client 110).

The communication unit 240 establishes connection with an external device 10(e.g., the first client 110) over a communication network (e.g., a mobile communication network (e.g., LTE), a wireless or wired LAN, etc.) under control of the controller 270, and perform data communication with the connected external device 10. The communication unit 240 establishes direction connection with an external device 20 (e.g., the first client 110) without assistance from a network (e.g., an access point (AP)) and perform data communication with the connected external device 20 over a designated frequency channel.

The speaker 250 coverts an audio signal received from the controller 270 into a sound wave and outputs the sound wave. The microphone 260 coverts a sound wave delivered from a person or another sound source into an audio signal and outputs the audio signal to the controller 270.

The controller 270 controls overall operation of the electronic device 200 and signal flow between internal constituent of the electronic device 200, processes data, and controls supply of power from the battery to the constituents. The controller 270 includes a processor 271. The processor 271 can include an Application Processor (AP), a communication processor (CP), a Graphic Processing Unit (GPU) and an audio processor. Herein, the CP can be a constituent of the communication unit 240.

The processor 271 (e.g., the AP) loads a command or data received from at least one of a connected non-volatile memory (e.g., a memory used a secondary memory) or other constituents onto a volatile memory (e.g., a memory used as a main memory) and process the same. In addition, the processor 271 stores data received from at least one of other constituents or data generated by at least one of the other in the non-volatile memory.

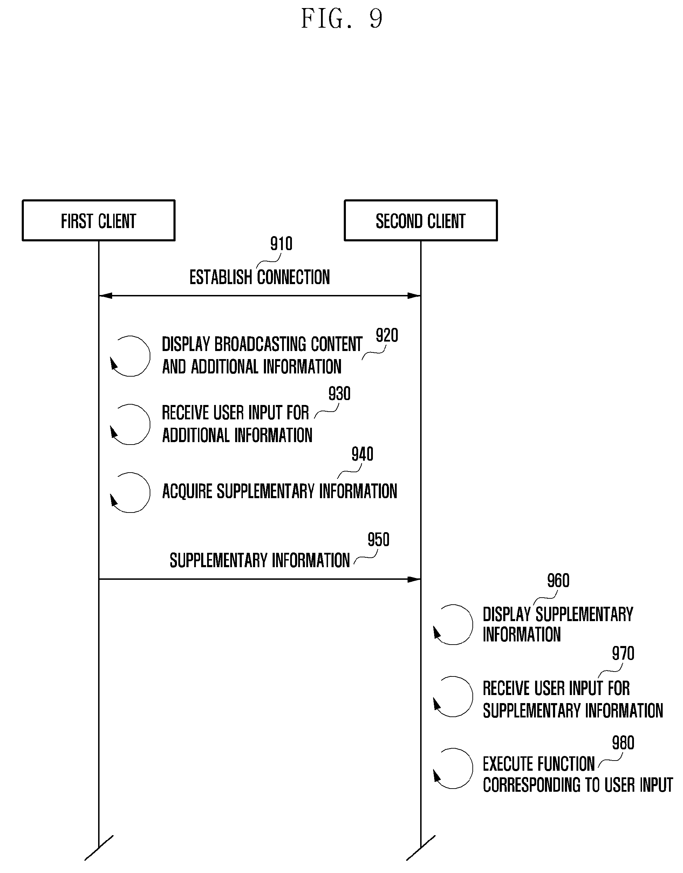

The processor 271 (e.g., the AP) implements a method for performing a function related to additional information using the function execution module 231. Hereinafter, various embodiments of the method will be described in detail with reference to FIGS. 9 to 18.

FIG. 3 is a flowchart illustrating a method for registering a fingerprint in a client according to various embodiments of the present disclosure.

Referring to FIG. 3, a server (e.g., the additional service server 140) can register new broadcasting content in the database in operation 310.

In operation 320, the server extracts a fingerprint in one frame of the newly registered broadcasting content.

In operation 330, the server transmits the extracted fingerprint and a content ID to a client (e.g., the first client 110). Some of the frames of the broadcasting content can be selected and fingerprints for the selected frames can be extracted. In addition, if several fingerprints are selected from one piece of broadcasting content, the server can configure an offset for each fingerprint. In this case, operation 330 can be an operation of transmitting content IDs, fingerprints and offsets to the client.

In operation 340, the client registers the received fingerprints and content ID in the database (e.g., local fingerprint DB 113a).

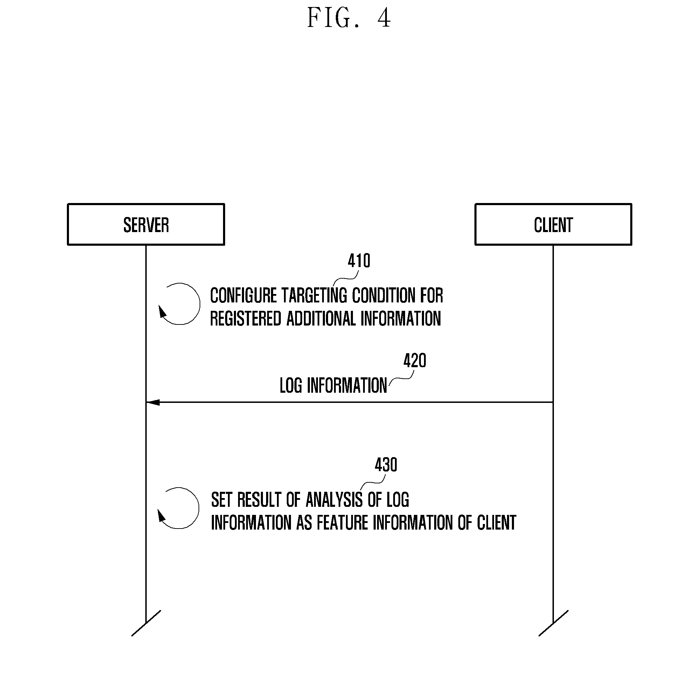

FIG. 4 is a flowchart illustrating a method for configuring feature information of a client according to various embodiments of the present disclosure.

Referring to FIG. 4, operation 410 the server (e.g., the additional service server 140) configures a targeting condition for additional information registered in a DB (e.g., the additional information DB 142b). For example, at least one of position information, time information, language information, device information and information indicating subscription to a broadcast channel can be configured as a targeting condition for the registered additional information.

In operation 420, the client (e.g., the first client 110) transmits collected log information (e.g., pattern information, watching history information, user response information, the number of exposures of additional information, etc.) to the server.

In operation 430, the server (e.g., a big data server) analyzes the meaning of the log information collected from the client (e.g., recognize the life style of the viewer), configures the result of analysis as feature information on the client and stores the result in the database (e.g., the log DB 142c).

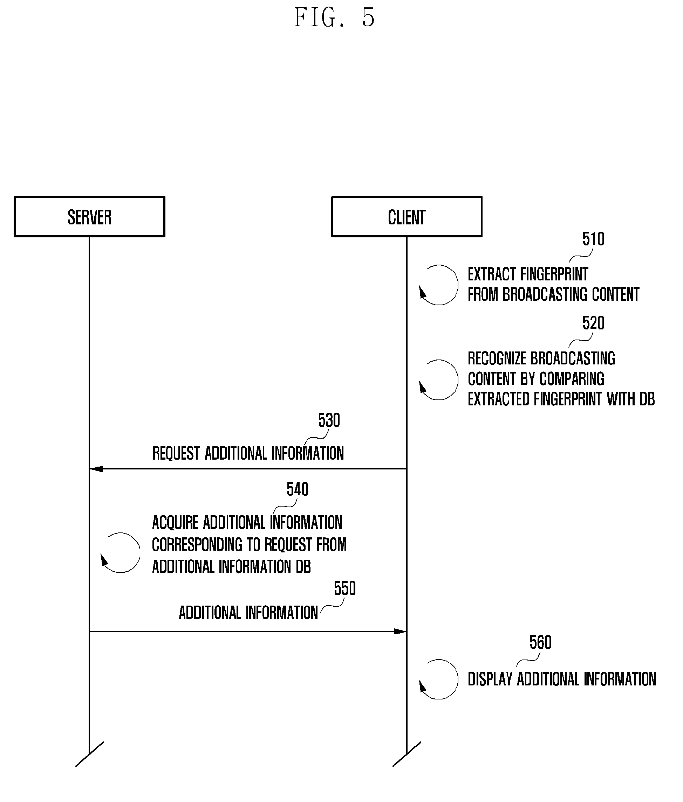

FIG. 5 is a flowchart illustrating a method for providing additional information based on a local fingerprint DB according to various embodiments of the present disclosure.

Referring to FIG. 5, a client (e.g., the first client 110) extracts a fingerprint from broadcasting content (e.g., broadcasting content that is being displayed or prepared to be displayed) in operation 510.

In operation 520, the client compares the fingerprint with the database (e.g., the local fingerprint DB 113a), and recognizes broadcasting content (e.g., acquires a content ID corresponding to the extracted fingerprint from the DB 113a).

In operation 530, the client transmits an additional information request message (including the acquired content ID) to a server (e.g., the additional service server 140). The request message further includes feature information on the client (device information, position information, user information, etc.).

In operation 540, the server acquires additional information corresponding to the request from the database (e.g., the additional information 142b). In operation 550, the server transmits the acquired additional information to the client.

Meanwhile, the server acquires multiple additional information items from the database. According to an embodiment, the server selects at least one of acquired additional information items based on the targeting condition, and transmits the selected additional information item to the client. Examples of selection of additional information based on the targeting condition are described below.

Position-based selection: If the request message contains position information indicating that the location of the client is New York, additional information having 'New York' as the targeting condition (e.g., an event indicating New York as an occasion place) can be selected and transmitted to the client. If the request message contains position information indicating that the location of the client is Florida, additional information having 'Florida' as the targeting condition can be selected and transmitted to the client.

Time-based selection: If the current time is a weekday, additional information having 'weekday' as the targeting condition (e.g., a weekday discounted price) can be selected and transmitted to the client. If the current time corresponds to a weekend, additional information having 'weekend' as the targeting condition can be selected and transmitted to the client.

Language-based selection: If the request message contains device information indicating that the language configured in the client is 'Chinese', additional information having 'Chinese' as the targeting condition (e.g., a banner advertisement in Chinese) can be selected and transmitted to the client.

Device information-based selection: The request message can contain user information indicating financial means of the user. For example, if the mode of the client is a 'smart TV' and the screen size thereof is 60 inches, additional information having 'luxury' as the targeting condition (e.g., a banner introducing a luxury sedan) can be transmitted to the client. If the client is from a lower class than the aforementioned model, additional information can be a banner advertising a compact car.

User information-based selection: The server receives usage pattern information, watching history information and user account to the client, and recognize characteristics of the viewer using the client, based on the received information. The server can selectively provide additional information to the client based on the recognized characteristics of the viewer. For example, an ID received from the client can indicate an advertisement of a cosmetics company 'A'. If the user of the client often uses a travel-related application and has recently watched travel-related content, the server recognizes the life style of the user as 'travel' based on the received information. Thereby, additional information having 'travel' as the targeting condition (e.g., a banner introducing a discounted coupon for a sun cream from the company 'A') can be transmitted to the client. The server recognizes, based on the received information, that the user of the client is a woman. Thereby, the server transmits additional information having 'woman' as the targeting condition (e.g., a banner introducing a discounted coupon of a moisture cream from the company 'A') to the client.

Broadcasting content attribute-based selection: The server can selectively provide additional information to the client based on the information on the recognized broadcasting content. For example, if the recognized broadcasting content is a 'charged channel advertisement', the server can check, based on, for example, the watching history information, whether the user of the client is a subscriber of the charged channel. If the user is not a subscriber of the charged channel as a result of the checking, the server can transmit additional information having 'non-subscriber' as the targeting condition (e.g., a subscription event) to the client. If the user is a subscriber of the charged channel, the server can transmit additional information having 'subscriber' as the targeting condition to the client.

According to an embodiment, the server selects at least one of acquired additional information items based on the log information, and transmits the selected additional information to the client. Examples of the log-based selection of additional information are described below.

The server checks the number of exposures of each of the acquired additional information items in a client from the database (e.g., the log information DB 142c), and selects at least one of acquired additional information items based on the number-of-exposures information. For example, the additional information items can be pre-assigned exposure priorities. That is, an additional information item having a higher priority than the other information items can be selected first. However, if an additional information item is exposed more than a preset threshold number of times, the information item can be excluded from selection. More specifically, a refrigerator-related banner can have a higher priority than a personal computer-related banner, and thus be selected first. However, if the refrigerator-related banner has been selected 5 times, the computer-related banner can be preferentially selected next time.

The server checks the database (e.g., log information DB 142c) to determine if the user has responded to each of the acquired additional information items on the client, and select at least of the acquired additional information items based on user response information. For example, different additional information can be transmitted to the client according to whether there has been a response from the user. Suppose that there are additional information items 'A' and 'B', and 'A' has a higher selection. According to this assumption, 'A' is preferentially provided to the client. If the user responds to 'A', 'B' is transmitted to the client next time.

In operation 560, the client displays additional information received from the server. For example, the additional information can be displayed on the screen along with broadcasting content. In addition, the additional information can be displayed on the whole screen as second broadcasting content.

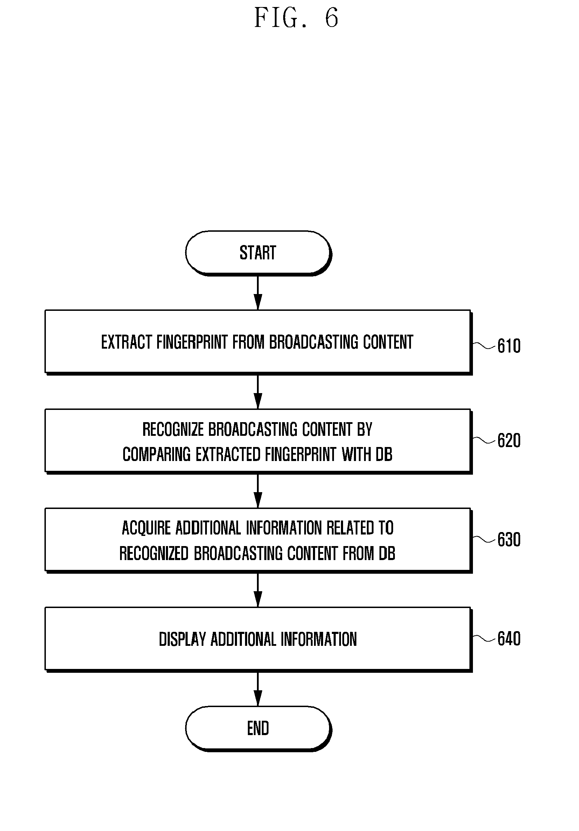

FIG. 6 is a flowchart illustrating a method for providing additional information based on a local fingerprint DB and a local additional information DB according to various embodiments of the present disclosure.

Referring to FIG. 6, a client (e.g., the first client 110) extracts a fingerprint from broadcasting content (e.g., broadcasting content that is being displayed or prepared to be displayed) in operation 610.

In operation 620, the client compares the extracted fingerprint with the database (e.g., local fingerprint DB 113a), and recognizes the broadcasting content (e.g., acquire a content ID corresponding to the extracted fingerprint From the DB 113a).

In operation 630, the client acquires additional information related to the recognized broadcasting content from the database (e.g., the local additional information DB 113b).

In operation 640, the client displays the acquired additional information. Meanwhile, multiple additional information items can be acquired. In this case, at least one of the acquired additional information items can be selected and displayed based on the aforementioned targeting condition or log.

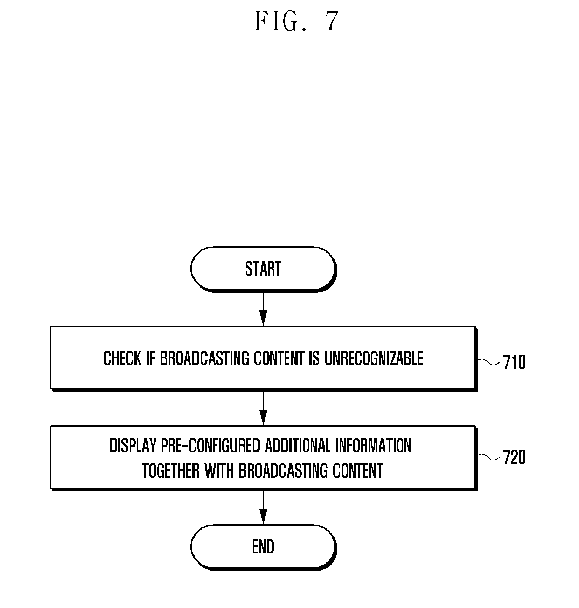

FIG. 7 is a flowchart illustrating a method for providing additional information when broadcast content is unrecognizable, according to various embodiments of the present disclosure.

Referring to FIG. 7, the client (e.g., the first client 110) checks if the broadcasting content is unrecognizable in operation 710. For example, the client can determine that the broadcasting content is unrecognizable 1) if a fingerprint is not extracted from the broadcasting content, 2) if a content ID corresponding to the extracted fingerprint is not searched in the database (e.g., local fingerprint DB 113a), 3) if the fingerprint has been transmitted to the server (e.g., the additional service server 140), but a content ID is not received in response.

In operation 720, the client displays the preconfigured additional information together with the broadcasting content on the screen.

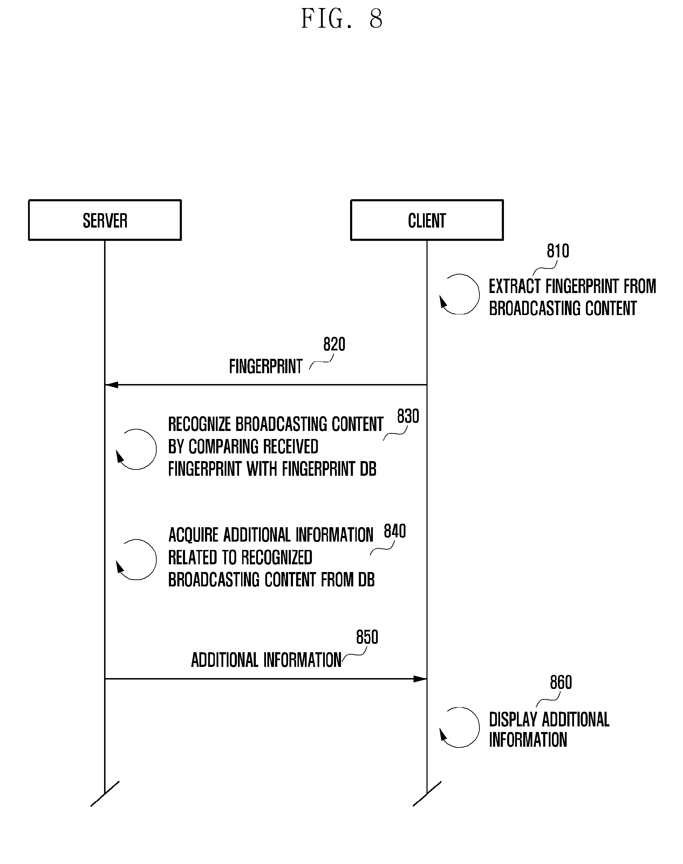

FIG. 8 is a flowchart illustrating a method for a method for remotely providing additional information according to various embodiments of the present disclosure.

Referring to FIG. 8, the client (e.g., the first client 110) extracts a fingerprint from the broadcasting content (e.g., broadcasting content that is being displayed or prepared to be displayed) in operation 810.

In operation 820, the client transmits an additional information request message containing the extracted fingerprint to the server (e.g., the additional service server 140). The request message can contain feature information on the client.

In operation 830, the server compares the received fingerprint with the database (e.g., the fingerprint DB 142a) and recognizes the broadcasting content (e.g., acquire a content ID corresponding to the extracted fingerprint from the DB 142a).

In operation 840, the server acquires additional information related to the recognized broadcasting content from the database (e.g., the additional information DB 142b). Meanwhile, multiple additional information items can be acquired. In this case, at least one of the acquired additional information items can be selected based on the targeting condition or log.

In operation 850, the server transmits the acquired (or selected) additional information to the client.

In operation 860, the client displays the received additional information.

FIG. 9 is a flowchart illustrating a method for providing additional information based on connection between devices according to various embodiments of the present disclosure.

Referring to FIG. 9, a first client (e.g., the first client 110) establishes connection with a second client (e.g., the second client 120) in operation 910. For example, these clients can establish connection therebetween without or through a medium (e.g., an access point). According to an embodiment, the connection establishment can include scanning determined frequency channel(s) and collecting information (e.g., advertisements) of nearby external devices which the external devices have transmitted, finding, based on the collected information, a nearby external device capable of performing communication with the electronic device, and exchanging communication information (e.g., IDs, IP addresses, etc.) with the found external device and completing the connection.

In operation 920, the first client displays the broadcasting content and additional information.

In operation 930, the first client receives a user input for the displayed additional information (i.e., a user response or an additional information request from the user). The user input can be an input generated by an internal constituent (e.g., the camera 112a, the microphone 112b) of the first client or an input received from an external device (e.g., the second client 120, the external input device 130).

In operation 940, the first client acquires additional information in response to the user input. For example, the additional information can be information that is received from the external device (e.g., the additional service server 140) as the first client makes a request for the information to the external device. Alternatively, the additional information can be information which the first client has pre-received from the external device and stored in a memory (e.g., the storage unit 113).

In operation 950, the first client transmits the additional information to the connected second client.

In operation 960, the second client displays the additional information.

In operation 970, the second client receives a user input for the displayed additional information.

In operation 980, the second client performs a function corresponding to the user input.

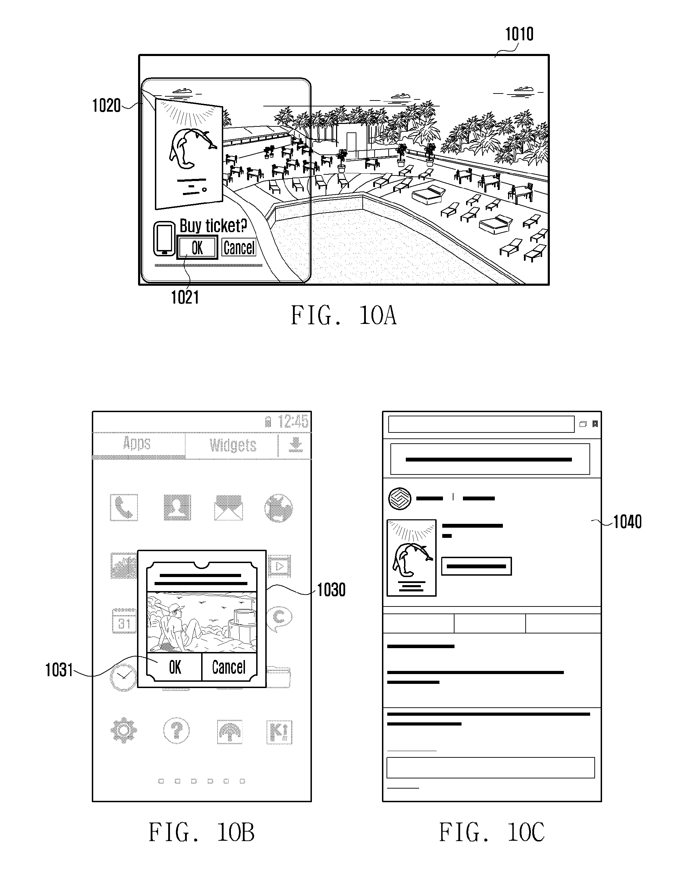

According to the method for providing additional information described with reference to FIG. 9, various implementations as illustrated in FIGS. 10 to 16 are possible.

FIGS. 10A, 10B and 10C show screens illustrating a purchase method using a multi-screen.

Referring to FIG. 10A, broadcasting content 1010 is displayed on the screen of a smart TV, and a banner 1020 for purchasing a ticket or a product is exposed thereon. When a viewer selects an OK button 1021 included in the banner 1020 using a direction key of a TV remote control and clicks a specific button of the TV remote control, the smart TV selects the OK button 1021 in response, and transmits a push message to a connected smartphone.

Referring to FIGS. 10B and 10C, the smartphone extracts information on a 'purchase site' from the push message, and displays a pup-up window 1030 including the same. When the viewer selects an OK button 1031 from the pop-up window 1030, the smartphone connects to the purchase site, and downloads and displays a page 1040 for purchasing a product or a ticket.

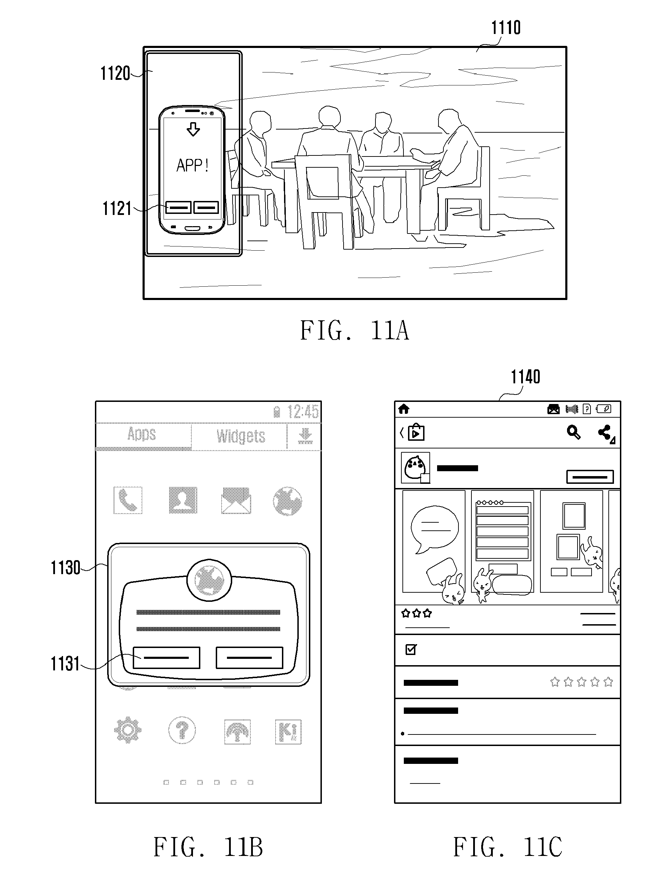

FIGS. 11A, 11B and 11C show screens illustrating a method for downloading and executing an application using a multi-screen.

Referring to FIG. 11A, broadcasting content 1110 is displayed on the screen of a smart TV, and a banner 1120 for downloading or executing an application is exposed thereon. When the viewer selects an OK button 1121 included in the banner 1120 using a direction key of a TV remote control and clicks a specific button of the TV remote control, the smart TV transmits a push message to a connected smartphone in response to selection of the OK button 1121.

Referring to FIGS. 11B and 11C, the smartphone extracts application information from the push message and displays a pop-up window 1130 including the same. When the viewer selects an OK button 1131 from the pop-up window 1130, the smartphone connects to an application store and downloads and displays a download page 1140 if the corresponding application has not been installed. If the application has been installed, the smartphone executes the application, displaying an execution window.

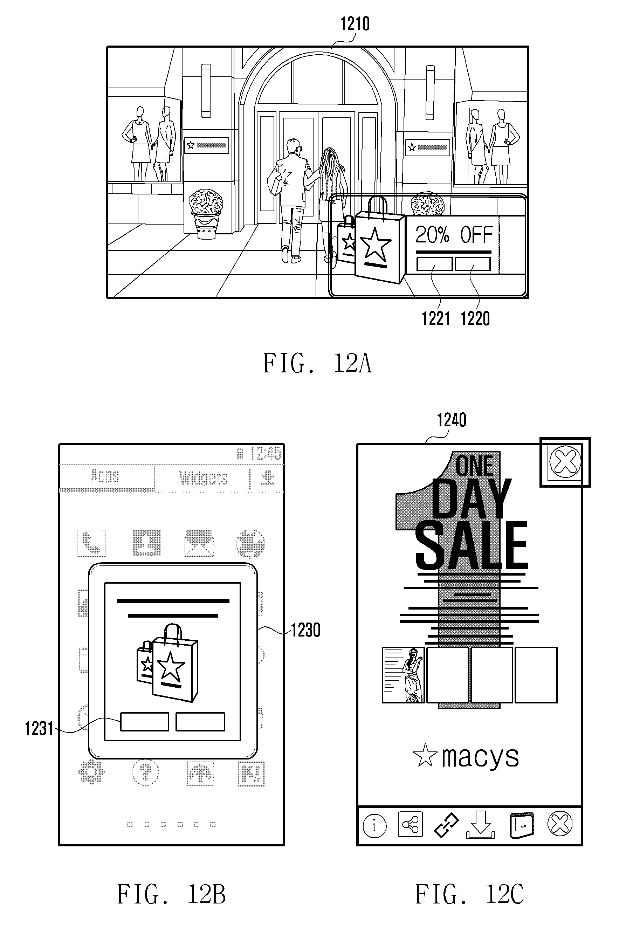

FIGS. 12A, 12B and 12C shows screens illustrating a method for downloading a coupon using a multi-screen.

Referring to FIG. 12A, broadcasting content 1210 is displayed on the screen of a smart TV, a banner 1220 for downloading a coupon is exposed thereon. When the viewer selects an OK button 1221 included in the banner 1220 using a direction key of a TV remote control and clicks a specific button of the TV remote control, the smart TV transmits a push message to a connected smartphone in response to selection of the OK button 1221.

Referring to FIGS. 12B and 12C, the smartphone extracts a banner from the push message and displays a pop-up window 1230 including the same. When the viewer selects an OK button 1231 included in pop-up window 1230, the smartphone displays a coupon 1240. The coupon 1240 can be configured by a microsite, stored in the gallery of the smartphone, and transmitted to an external device through an email or SMS. The microsite is typically configured by a page, a tab, an image and a button, which are created based on HTML, and also be connected to an internal function (call, message, email, etc.) or an external link.

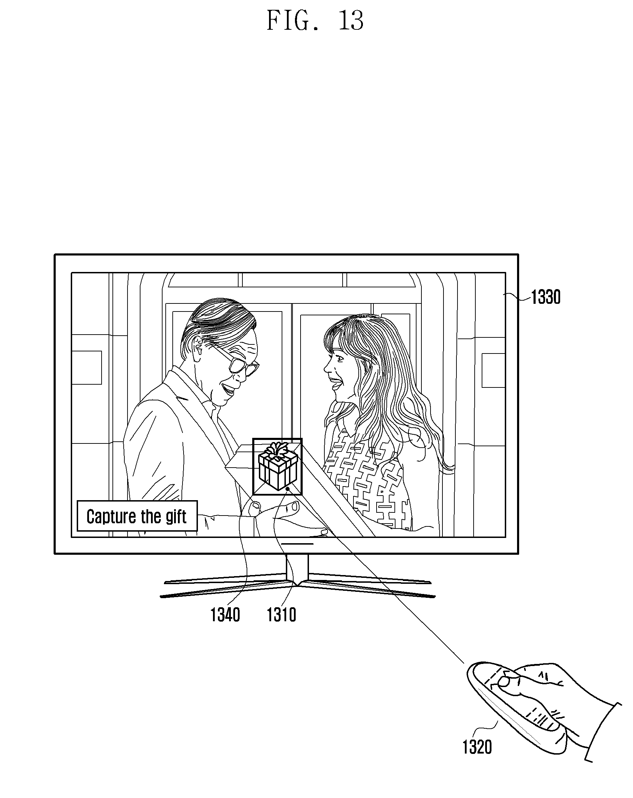

FIG. 13 shows a screen illustrating a method for providing an additional service by utilizing a pointer of a remote control.

Referring to FIG. 13, a pointer 1310 can be displayed on the screen of a smart TV. The position where the pointer 1310 is displayed is changed according to pose change of a TV remote control 1320. To this end, the TV remote control 1320 can be provided with a sensor for measuring pose change (e.g., an acceleration sensor, a gravitational sensor, etc.). The smart TV can receive information on the pose change from the TV remote control 1320, calculate coordinates using the information and display the pointer 1310 at the calculated coordinates. The smart TV can display broadcasting content 1330 and display a gift box 1340 thereon. If the viewer selects a specific button of the TV remote control 1320 while positioning the pointer 1310 on the gift box 1340 using the TV remote control 1320, the TV remote control 1320 transmits a signal indicating selection of the specific button to the smart TV. In response to selection of the specific button, the smart TV transmits a push message for purchase, download of a coupon or execute of an application to a connected smartphone, recognizing that the pointer 1310 is positioned on the gift box 1340.

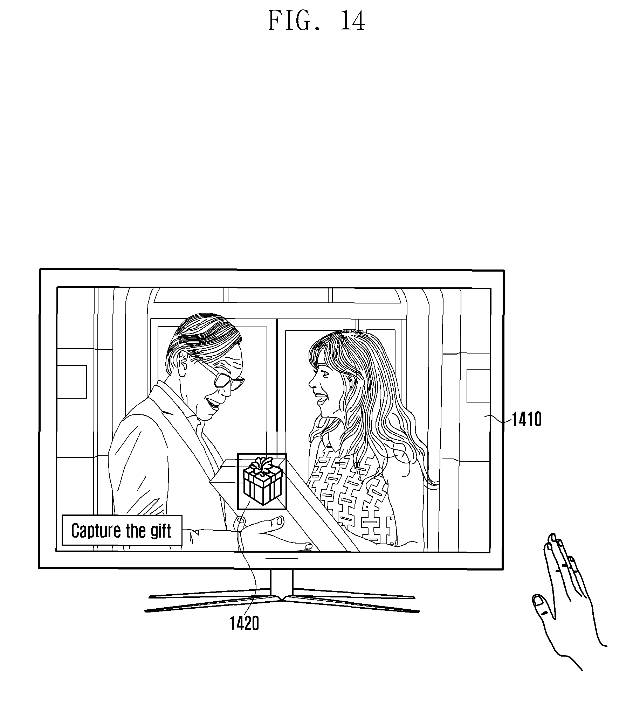

FIG. 14 shows a screen illustrating a method for providing an additional service by utilizing gesture recognition.

Referring FIG. 14, broadcasting content 1410 is displayed on the screen of a smart TV and a gift box 1420 is exposed thereon. The smart TV recognizes a gesture of the user. According to an embodiment, a camera of the smart TV captures a moving image and delivers the same to a gesture recognition module. The gesture recognition module of the smart TV processes the moving image and extracts feature information therefrom. If the extracted feature information coincides with information indicating a specific gesture (e.g., a grabbing gesture of a hand, a gesture of drawing a circle with a fingertip, etc.), the smart TV transmits a push message for purchase, download of a coupon or execution of an application to a connected smartphone.

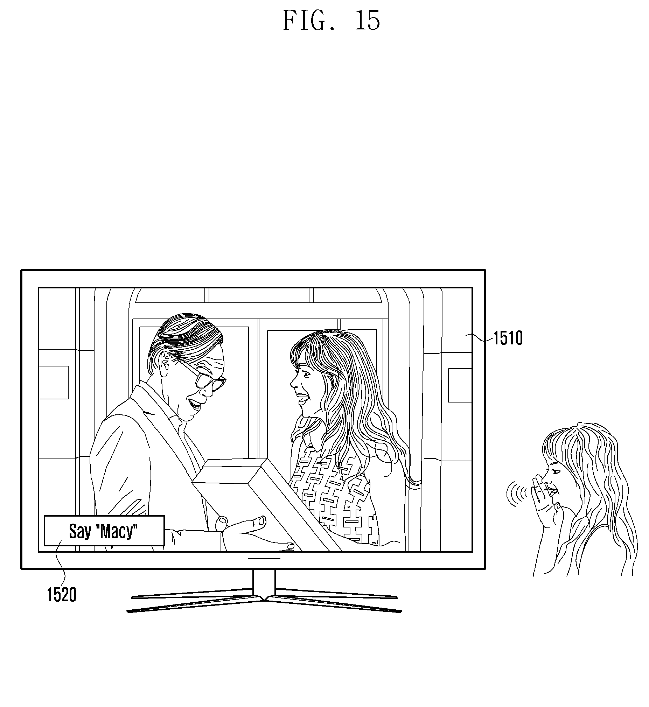

FIG. 15 shows a screen illustrating a method for providing an additional service by utilizing voice recognition.

Referring to FIG. 15, broadcasting content 1510 is displayed on the screen of a smart TV and a banner 1520 reading "Say Marcy" is exposed thereon. When the viewer says "Marcy", the smart TV coverts voice data of the user received through a microphone into a text. If the text coincides with "Marcy", the smart TV transmits a push message for purchase, download of a coupon or execution of an application to a smartphone thereto.

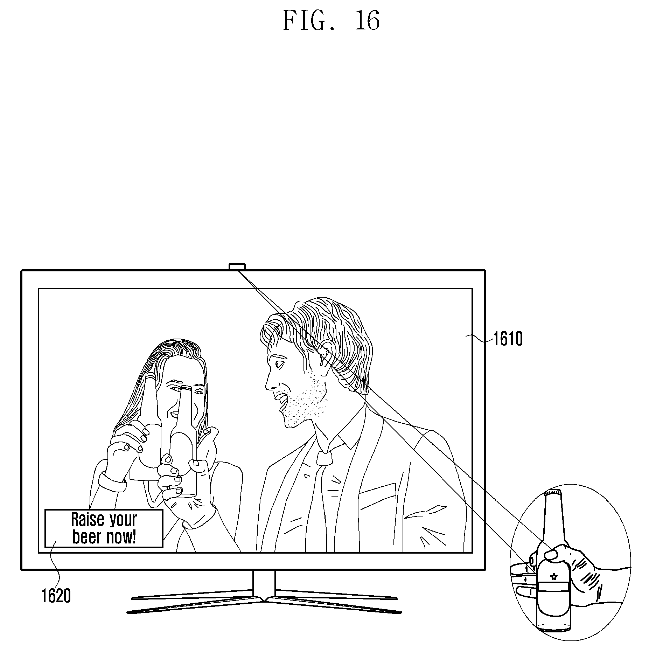

FIG. 16 shows a screen illustrating a method for providing an additional service by utilizing object recognition.

Referring to FIG. 16, broadcasting content 1610 is displayed on the screen of a smart TV, a banner 1620 reading "Raise your beer now" is exposed thereon. The camera of the smart TV captures a moving image and delivers the same to an object recognition module. The object recognition module processes the moving image and recognizes an object in the moving image. If the recognized object is a 'beer bottle' coinciding with the subject of the banner 1620, the smart TV transmits, to a smartphone connected thereto, a push message for purchase, download of a coupon or execution of an application.

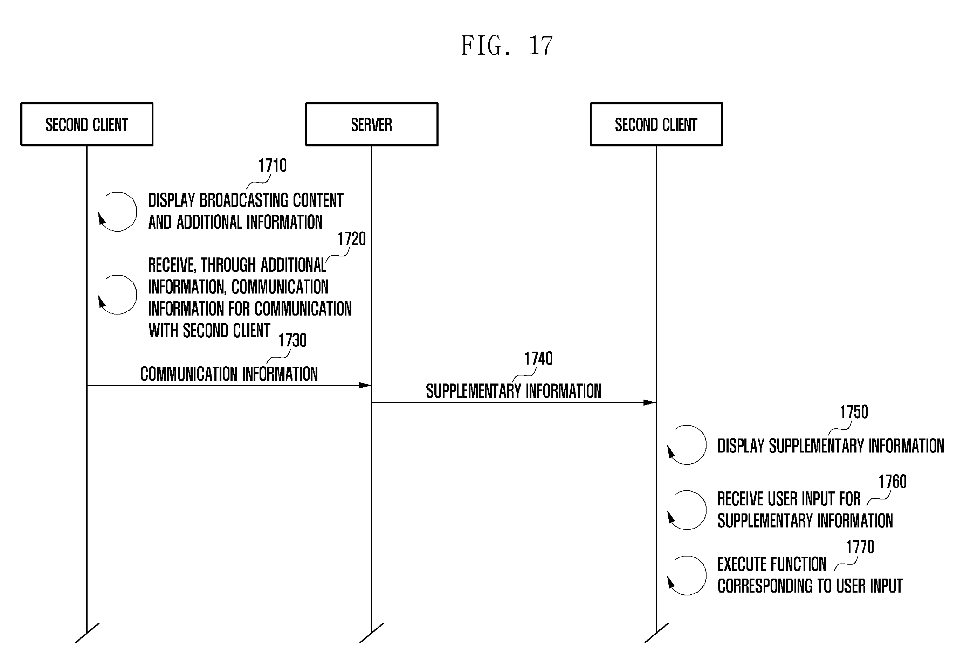

FIG. 17 is a flowchart illustrating a method for providing supplementary information without connection between devices according to various embodiments of the present disclosure.

In operation 1710, a first client (e.g., the first client 110) displays broadcasting content and additional information.

In operation 1720, the first client receives, through additional information, communication information (e.g., a cellular phone number) for performing communication with a second client (e.g., the second client 120). The communication information can be information received from an external device (e.g., the second client 120 or the external input device 130) or information generated by an internal constituent (e.g., the input unit 112). According to an embodiment, the communication information can be information (e.g., the phone number of the second client 120 stored in the storage unit 113) pre-known to the first client. In this case, reception of the communication information can be omitted.

In operation 1730, the first client transmits a request for provision of information (including communication information) to the server.

In operation 1740, the server transmits supplementary information to the second client in response to the request from the first client.

In operation 1750, the second client displays the supplementary information.

In operation 1760, the second client receives a user input for the displayed supplementary information.

In operation 1770, the second client performs a function corresponding to the user input.

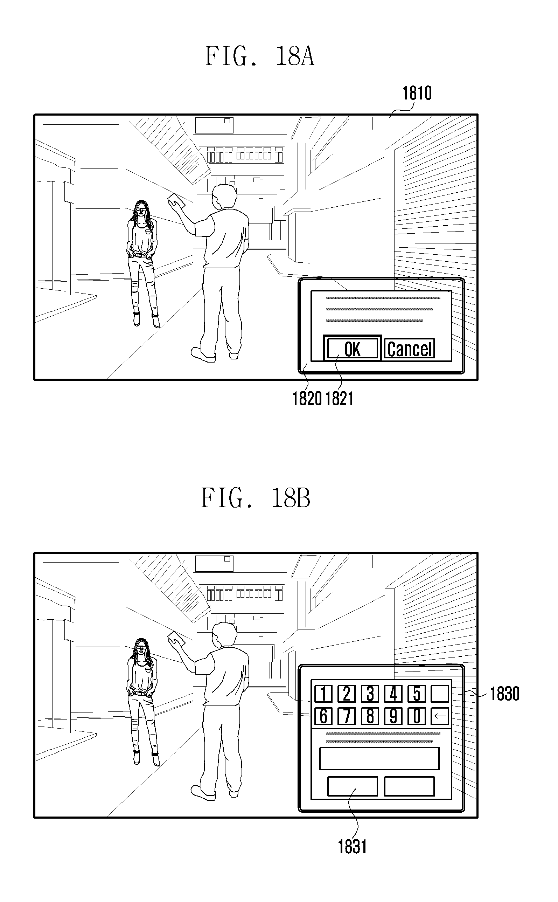

According to the method for providing supplementary information described above with reference to FIG. 17, an implementation illustrated in FIG. 18 is possible.

FIGS. 18A and 18B show screens illustrating a method for providing an additional service using participation-type onscreen.

Referring to FIGS. 18A and 18B, broadcasting content 1810 is displayed on the screen of a smart TV, and a banner 1820 for delivering a contact number of the user to a party concerned with the content (e.g., an advertiser) is exposed thereon. When the viewer selects an OK button 1821 in the banner 1020 using a direction key of a TV remote control, and clicks a specific button of the TV remote control, the TV remote control transmits a user input (i.e., a user response) for the banner 1820 to the smart TV. The smart TV displays a secondary banner 1830 for inputting the contact number in response to the user input.

When the viewer inputs a phone number of a smartphone to the smart TV using the TV remote control, selects an OK button 1831 included in the banner 1830 using a direction key of a TV remote control, and clicks a specific button of the TV remote control, the TV remote control transmits a user input for the banner 1830 (i.e., an additional information request from the user) to the smart TV. The smart TV transmits the input phone number to the server (e.g., an advertiser server) in response to the user input. The server provides additional information to a smartphone. Meanwhile, if the phone number of the smartphone is pre-stored in the smart TV, the smart TV can transmit the phone number to the server when the OK button 1821 is selected.

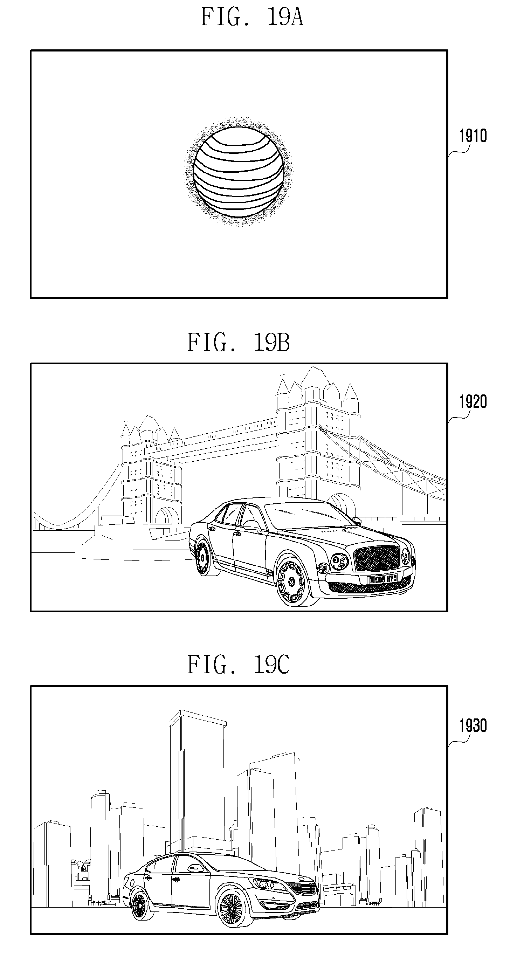

According to the method for providing additional information described above with reference to FIGS. 5 to 8, an implementation illustrated in FIG. 19 is possible.

FIGS. 19A, 19B and 19C show screens illustrating a method for providing an additional service using non-participation-type onscreen.

Referring to FIG. 19A, the smart TV displays broadcasting content 1910. If additional information is received from a server (e.g., the additional service server 140) while broadcasting content 1910 is being displayed, and the received additional information is a video, the smart TV can output the video through the whole screen subsequent to the broadcasting content 1910. Thereby, the viewer assumes that the broadcasting content 1910 and the additional information form one video. The additional information can be information selected based on the aforementioned targeting condition or log. For example, additional information 1920 shown in FIG. 19B can have 'man' as the targeting condition, and additional information 1930 shown in FIG. 19C can have 'assumption' as the targeting condition.

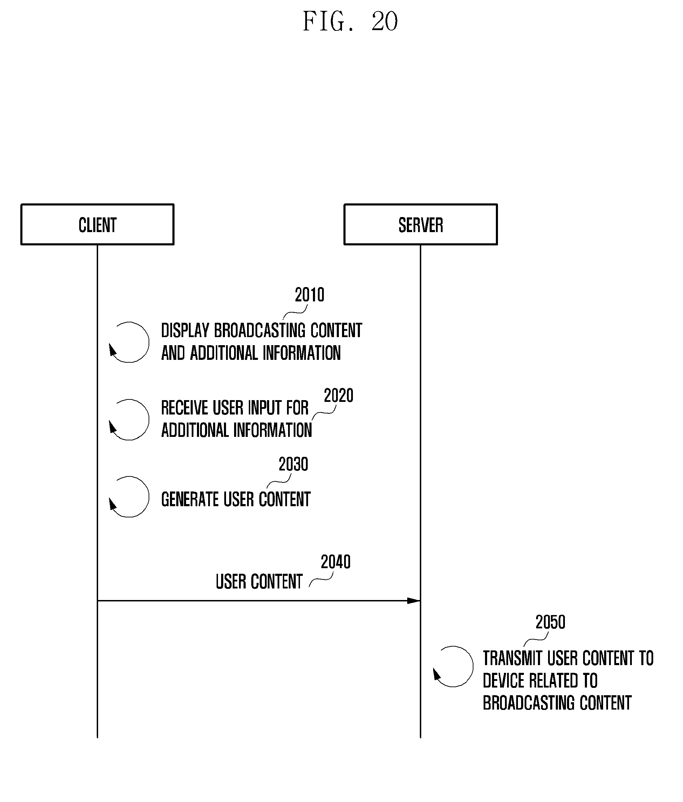

FIG. 20 is a flowchart illustrating a method for providing user content according to various embodiments of the present disclosure.

Referring to FIG. 20, a client (e.g., the first client 110) displays broadcasting content and additional information in operation 2010.

In operation 2020, the client receives a user input (i.e., a user response or a content generation request) for the displayed additional information.

In operation 2030, the client generates user content (e.g., a video, an audio, a document file, etc.) in response to the user input

In operation 2040, the client transmits the user content to the server (e.g., the additional service server 140).

In operation 2050, the server transmits the user content to a device related to the broadcasting content.

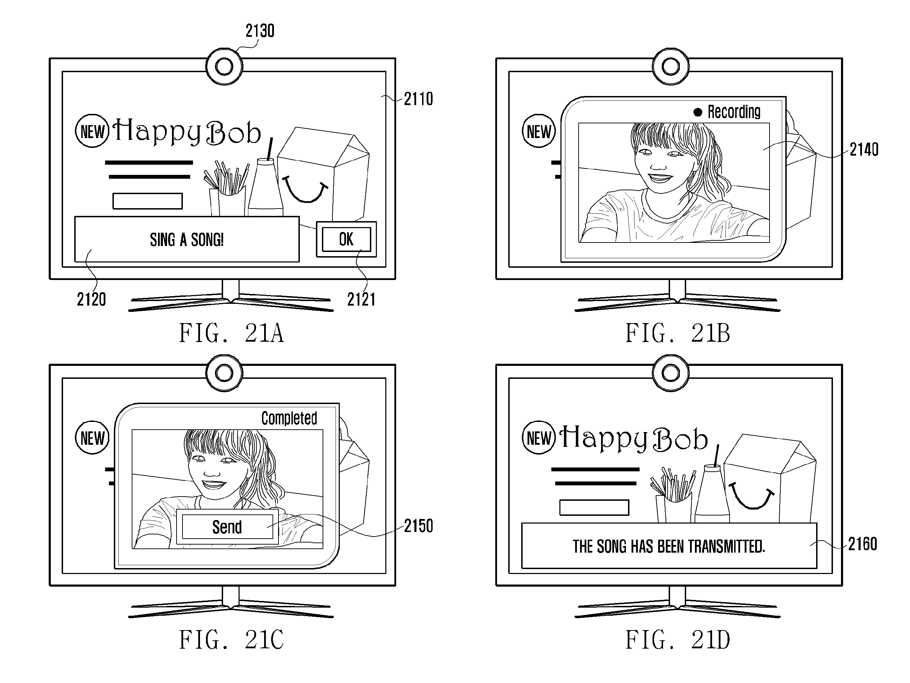

According to the method for providing user content described above with reference to FIG. 20, an implementation illustrated in FIG. 21 is possible.

FIGS. 21A, 21B, 21C and 21D show screens illustrating a method for providing additional services using participation-type onscreen.

Referring to FIG. 21A, broadcasting content 2110 is displayed on the screen of a smart TV, and a banner 2120 for transmitting UCC (user created content) to a party concerned with the content (e.g., an advertiser). When the viewer selects an OK button 2121 included in the banner 2120 using a direction key of a TV remote control and clicks a specific button (e.g., the "OK" button) of the TV remote control, the TV remote control transmits a user input (i.e., a content generation request) for the banner 2120 to the smart TV. The smart TV drives a camera 2130 in response to the user input.

Referring to FIG. 21B, the camera 2130 captures and records an image 2140, and displays the same on the screen.

Referring to FIG. 21C, when the viewer clicks a recording completion button of the TV remote control, the smart TV completes recording and displays a SEND button 2150 on the image. When the viewer selects the SEND button 2150 using a direction key of the TV remote control, and clicks a specific button (e.g., an "OK" button) of the TV remote control, the TV remote control transmits a user input (i.g., a user content send request) for the SEND button 2150 to the smart TV. The smart TV transmits the recorded moving image (user content) to the server (e.g., the additional service server 140) in response to the user input. The server delivers the user content to a device (e.g., a businessman hosting a UCC creation event) related to the broadcasting content 2110.

Referring to FIG. 21D, the smart TV displays a transmission completion message 2160 on the screen.

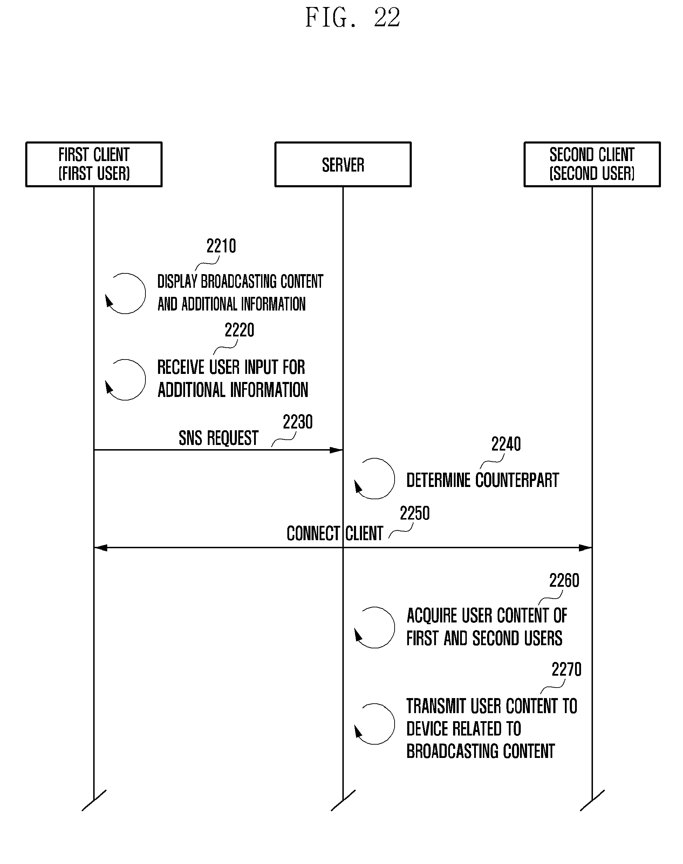

FIG. 22 is a flowchart illustrating a method for providing user content using Social Network Service (SNS) according to various embodiments of the present disclosure.

Referring to FIG. 22, a first client (e.g., the first client 110) displays broadcasting content and additional information in operation 2210.

In operation 2220, the first client receives a user input for the displayed additional information (namely, a user response or an SNS (social network service) request).

In operation 2230, the first client transmits the SNS request to the server (e.g., the additional service server 140) in response to the user input.

In operation 2240, the server determines a counterpart connected to the first client in response to the SNS request. For example, at least one client (e.g., a second client) of the clients requesting SNS prior to the first client can be determined as the counterpart.

In operation 2250, the server connects the first client and the second client to each other (e.g., relay transmission and reception of data (e.g., user content) between the clients).

In operation 2260, the server acquires first user content of the first client and second user content of the second client.

In operation 2270, the server transmits the acquired user content to a device related to the broadcasting content (e.g., a service operator hosting an SNS event).

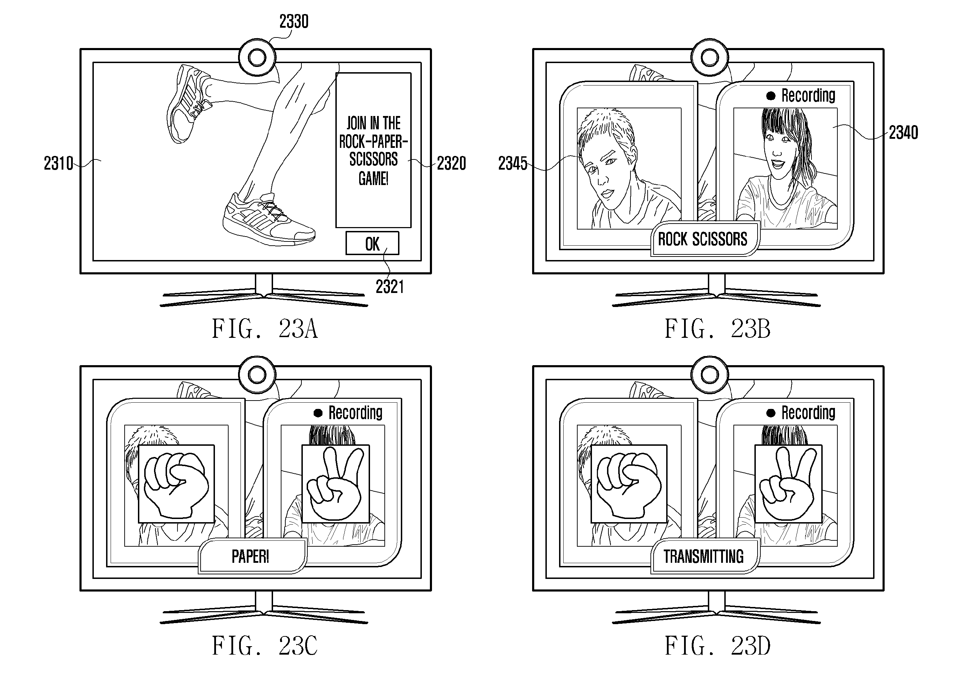

According to the method for providing user content described above with reference to FIG. 22, an implementation illustrated in FIG. 23 is possible.

FIGS. 23A, 23B, 23C and 23D show screens illustrating a method for providing additional services using participation-type onscreen.

Referring to FIG. 23A, broadcasting content 2310 is displayed on the screen of a smart TV, and a banner 2320 for participation in a game is exposed thereon. When the viewer selects an OK button 2321 included in the banner 2320 using a direction key of a TV remote control, and clicks a specific button (e.g., the "OK" button) of the TV remote control, the TV remote control transmits a user input (i.e., a game participation request) for the banner 2320 to the smart TV. The smart TV transmits a game participation request message to the server in response to the user input. In addition, the smart TV drives a camera 2330.

Referring to FIGS. 23B and 23C, when the smart TV is connected to a counterpart device through the server, the smart TV transmits a captured image to the counterpart device through the server. In addition, the smart TV receives an image captured by the counterpart device from the counterpart device via the server. The smart TV displays and records a captured image 2340 and an image 2345 of the counterpart device received from the server simultaneously. In addition, an event of the rock-paper-scissors game is automatically conducted on both the smart TV and counterpart device via the server for a predetermined time (e.g., 15 sec).

Referring to FIG. 23D, when the predetermined time elapses, the smart TV transmits a game result and a recorded image to the server. The counterpart device also transmits a game result and a recorded image to the server. The server can deliver the user content (the game results and recorded images) to a device related to the broadcasting content 2310 (e.g., an operator hosting the game event).

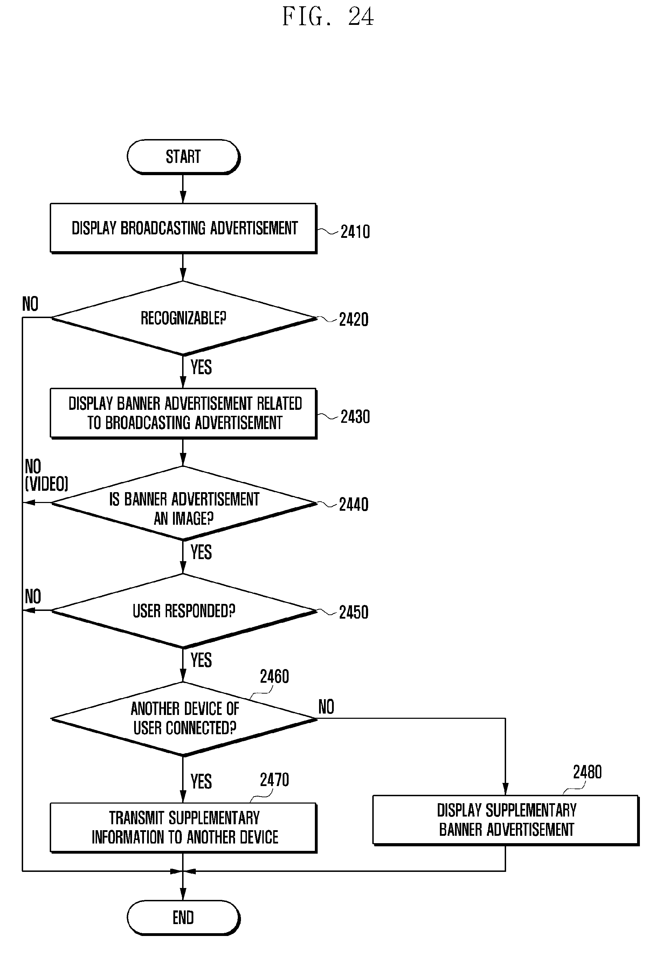

FIG. 24 is a flowchart illustrating a method for providing a broadcasting advertisement service according to various embodiments of the present disclosure.

Referring to FIG. 24, an electronic device (e.g., the first client 110) displays a broadcasting advertisement operation 2410.

In operation 2420, the electronic device determines whether or not the broadcasting advertisement is recognized. If the broadcasting advertisement is unrecognizable, the electronic device can display a pre-configured banner advertisement together with the broadcasting advertisement. When displaying the broadcasting advertisement is terminated, displaying the banner advertisement can also be terminated.

If the broadcasting advertisement is recognized, the electronic device acquires a banner advertisement related to the recognized broadcasting advertisement and displays the same together with the broadcasting advertisement in operation 2430.

In operation 2440, the electronic device determines whether the banner advertisement is an image. If the banner advertisement is a video, the electronic device outputs the video through the whole screen.

If the banner advertisement is an image, the electronic device determines whether there is a user response to the image. If there is no response to the image until the broadcasting advertisement is terminated, displaying the image can be terminated.

If there is a user response, the electronic device determines whether the electronic device is connected to another device of the user (e.g., the second client 120) in operation 2460.

If the electronic device is connected to anther device, the electronic device transmits additional information to the connected device in operation 2470.

If there is no other device connected to the electronic device, the electronic device displays an additional banner advertisement in operation 2480.

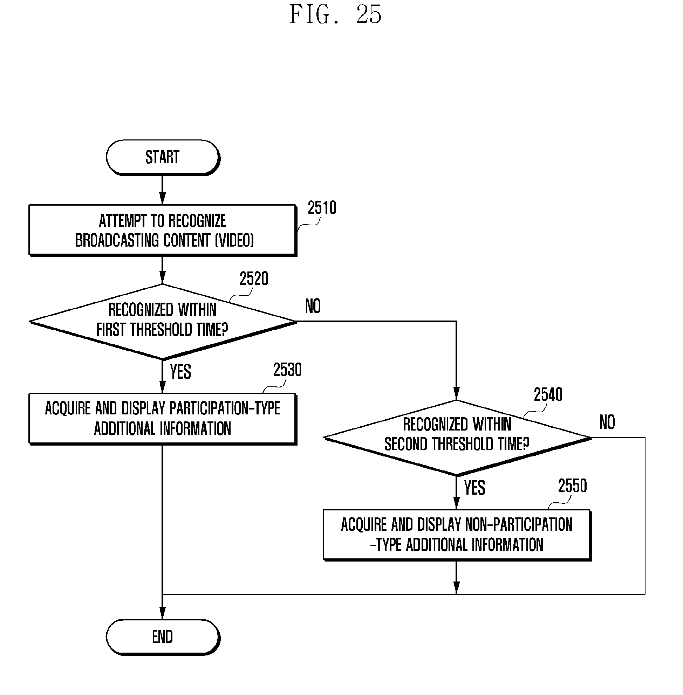

FIG. 25 is a flowchart illustrating a method for providing additional information when recognition of broadcast content is delayed, according to various embodiments of the present disclosure.

Referring to FIG. 25, a client (e.g., the first client 110) attempts to recognize broadcasting content (a video) in operation 2510.

In operation 2520, the client determines whether the video is recognized within a first predetermined threshold time from the time when the recognition operation begins. For example, 1-1) if a fingerprint is extracted from the broadcasting content and a content ID corresponding to the extracted fingerprint is retrieved from the database (e.g., the local fingerprint DB 113a) within the first threshold time, or 1-2) a fingerprint is extracted from the broadcasting content and transmitted to the server (e.g., the additional service server 140), and a content ID is received in response within the first threshold time, the broadcasting content can be determined to be recognized. On the other hand, 2-1) a fingerprint is not extracted from the broadcasting content within the first threshold time, 2-2) if a fingerprint is extracted, but a content ID corresponding to the extracted fingerprint is not retrieved from the database within the first threshold time, or 2-3) if a fingerprint is extracted and transmitted to the server (e.g., the additional service server 140), but a content ID is not received in response within the first threshold time, it can be determined that the broadcasting content is not recognized. Meanwhile, the time when the recognition operation begins can be a time when a certain frame (e.g., the first frame) of the video delivered to the display unit 111 (e.g., a time when the frame is stored in the internal memory of the display unit 111) or a time when the display unit 111 displays a certain frame (e.g., the first frame) (e.g., a time when the drive unit of the display unit 111 delivers the first frame to the display panel of the display unit 111).

If broadcasting content is recognized as a result of operation 2520, the client acquires and displays participation-type additional information (e.g., additional information in the form of an image as illustrated in FIGS. 10 to 18) related to the broadcasting content in operation 2530. For example, the client can search the database (e.g., the local additional information DB 113b) for an ID coinciding with the retrieved content ID, and acquire participation-type additional information corresponding to the searched ID from the database. As another example, the client can transmit a request for participation-type additional information including the retrieved content ID to the server (e.g., the additional service server 140), receive the participation-type additional information from the server in response, and display the same.

If broadcasting content is not recognized as a result of operation 2520, the client can determine whether or not a video is recognized within a second predetermined threshold time from the time when the recognition operation begins (or from the time the first threshold time passes) in operation 2540. For example, if case 1-1) or 1-2) occurs within the second threshold time, it can be determined that broadcasting content is recognized. On the other hand, if case 2-1), 2-2) or 2-3) occurs within the second threshold time, it can be determined that broadcasting content is not recognized.

If broadcasting content is recognized as a result of operation 2540, the client can acquire and display non-participation-type additional information (e.g., additional information in the form of an image as illustrated in FIG. 19) related to the broadcasting content in operation 2550. For example, the client can search the database (e.g., the local additional information DB 113b) for an ID coinciding with the retrieved content ID, acquire non-participation-type additional information corresponding to the searched ID, and display the same. As another example, the client can transmit a request for non-participation-type additional information including the retrieved content ID to the server (e.g., the additional service server 140), receive non-participation-type additional information from the server in response, and display the same.

If broadcasting content is not recognized as a result of operation 2540, the client determines that the broadcasting content is unrecognizable. In this case, even if broadcasting content is recognized after the determination, the client may not display corresponding additional information.

Meanwhile, the first threshold time can be set in consideration of a time for which the user can sufficiently respond to the additional information (i.e., a time for which the user can recognize the details and respond (perform participation)). For example, if the playback time of the broadcasting advertisement is 15 seconds, the first threshold time can be set to 3 seconds. The second threshold time can be set in consideration of a time for which the user can recognize the additional information (i.e., a time for which the user can recognize the details). For example, if the playback time of the broadcasting advertisement is 15 seconds, the second threshold time can be set to 10 seconds (i.e., 5 seconds before termination).

The additional information can be a video. Accordingly, the first threshold time can be set in consideration of the playback time of the additional information. For example, suppose that playback of the additional information should be terminated by the time of or immediately before termination of playback of the broadcasting content. In this case, if the playback time of the broadcasting content is 15 seconds, and the broadcasting content is recognized at a time corresponding to 5 seconds, additional information corresponding to the remaining 10 seconds (e.g., additional information having 10 seconds as a playback time) can be acquired and reproduced. If the broadcasting content is recognized at a time corresponding to 10 seconds, additional information corresponding to the remaining 5 seconds (e.g., additional information having 5 seconds as a playback time) can be acquired and reproduced. Specifically, the method for displaying additional information according to this embodiment can include the client extracting a fingerprint from the broadcasting content, retrieving a content ID corresponding to the extracted fingerprint from the DB, and acquiring additional information corresponding to the content ID and information indicating recognition time (e.g., the position value of the extracted fingerprint (e.g., offset)) from the DB. As another example, the method for displaying additional information can include the client extracting a fingerprint from the broadcasting content, retrieving a content ID corresponding to the extracted fingerprint from the DB, transmitting, to the server, a request for additional information including the content ID and information indicating the recognition time, and receiving the additional information from the server and displaying the same.

The term "module" used in embodiments of the present disclosure can refer to, for example, a "unit" including one of hardware, software, and firmware, or a combination of two or more thereof. The term "module" can be interchangeable with a term such as a unit, a logic, a logical block, a component, or a circuit. The "module" can be a minimum unit of an integrated component or a part thereof. The "module" can be a minimum unit for performing one or more functions or a part thereof. The "module" can be mechanically or electronically implemented. For example, the "module" according to embodiments of the present disclosure can include at least one of an Application-Specific Integrated Circuit (ASIC) chip, a Field-Programmable Gate Arrays (FPGA), and a programmable-logic device for performing operations which has been known or are to be developed hereinafter.

According to various embodiments of the present disclosure, at least some of the devices (for example, e.g., modules or functions thereof) or the method (for example, e.g., operations) can be implemented by a command stored in a computer-readable storage medium in a programming module form. When the command is executed by a processor, the processor can execute a function corresponding to the command. The computer-readable storage medium can be, for example, the storage unit 130. At least one part of the programming module can be implemented (for example, executed) by, the processor. At least one part of the programming module can include, for example, a module, a program, a routine, a set of instructions, and/or a process for performing one or more functions.

The non-transitory computer-readable recording medium can include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, e.g., programming module), such as a Read Only Memory (ROM), a Random Access Memory (RAM), a flash memory and the like. In addition, the program instructions can include high class language codes, which can be executed in a computer by using an interpreter, as well as machine codes made by a compiler. The aforementioned hardware device can be configured to operate as one or more software modules in order to perform the operation of various embodiments of the present disclosure, and vice versa.

The module or programming module according to various embodiments of the present disclosure can include one or more of the aforementioned components or can further include other additional components, or some of the aforementioned components can be omitted. Operations performed by a module, a programming module, or other component elements according to various embodiments of the present disclosure can be executed sequentially, in parallel, repeatedly, or in a heuristic manner. Further, some operations can be executed according to another order or omitted, or other operations can be added.

As apparent from the above description, the present disclosure has effects as follows.

According to embodiments of the present disclosure, a user can easily access additional information related to broadcast content, view additional information suitable for the user, and participate in various events through broadcast content. Accordingly, broadcast service effect (e.g., advertising effect) can be enhanced.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for providing information by an electronic device, comprising:
transmitting identification information of broadcasting content and feature information of the electronic device to a first external device;
receiving, from the first external device, additional information related to the identification information and the feature information; and
displaying the additional information together with the broadcasting content.

2. The method of claim 1, further comprising:
receiving a use input for the additional information; and
in response to the user input, performing an operation,
wherein the operation comprises at least one of:
transmitting supplementary information to a second external device connected to the electronic device,
transmitting, to the first external device, communication information for communication with a second external device and
generating user content and then transmitting the user content to the first external device.

3. The method of claim 1, further comprising:
displaying, when the additional information is a video, the video in place of the broadcasting content.

4. The method of claim 1, further comprising:
receiving a user input for the additional information;
transmitting a social networking service request to the first external device in response to the user input; and
performing data communication with a second external device via the first external device.

5. The method of claim 1, wherein the identification information transmitted to the first external device comprises information indicating a time when the broadcasting content is recognized.

6. A method for providing information by an electronic device, comprising:
receiving identification information of broadcasting content and feature information of a first external device from the first external device;
acquiring at least one additional information item related to the identification information;
selecting an additional information item having a targeting condition satisfying the feature information from among the at least one acquired additional information item; and
transmitting the selected additional information item to the first external device.

7. The method of claim 6, further comprising:
receiving communication information for communication with a second external device from the first external device; and
transmitting supplementary information related to the additional information item to the second external device, based on the communication information.

8. The method of claim 6, further comprising:
receiving user content from the first external device; and
transmitting the user content to a device related to the broadcasting content.

9. The method of claim 6, further comprising:
receiving a social networking service request from the first external device;
determining a counterpart to be connected to the first external device in response to the request;
connecting a second external device determined as the counterpart to the first external device;
transmitting user content received from the external devices to a device related to the broadcasting content.

10. The method of claim 6, wherein the feature information received from the first external device comprises at least one of device information on the first external device, position information on the first external device, user information on the first external device, language information configured in the first external device, attribute information on the first external device and connection status information indicating whether the first external device is connected to anther device.

11. The method of claim 6, wherein selecting the additional information comprises selecting at least one of the at least one acquired additional information item based on log information received from the first external device, and
wherein the log information comprises at least one of the number of times of displaying the at least one acquired additional information on the first external device and information indicating whether or not a user has responded to the at least one acquired additional information item.

12. An electronic device comprising:
a communication unit configured to communicate with an external device;
a extraction unit configured to extract a fingerprint from broadcasting content displayed or prepared to be displayed;
a content recognition unit configured to check a fingerprint coinciding with the extracted fingerprint in a database and to acquire identification information of the broadcasting content corresponding to the checked fingerprint;
a display controller configured to control
transmitting the identification information and feature information of the electronic device to a first external device via the communication unit,
receiving additional information related to the identification information and the feature information from the first external device via the communication unit and
displaying the additional information together with the broadcasting content.

13. The electronic device of claim 12, further comprising:
a database (DB) management module configured to receive a fingerprint list from the first external device via the communication unit to update the database.

14. The electronic device of claim 13, wherein, when the DB management module has a function of receiving an additional information list from the first external device via the communication unit to update the database,
the content recognition module is configured to acquire the additional information related to the identification information and the feature information from the database.

15. An electronic device comprising:
a communication unit configured to communicate with an external device; and
an information provision unit configured to
receive identification information of and feature information of the external device from the external device,
acquire at least one additional information item related to the identification information from a database,
select an additional information item having a targeting condition satisfying the feature information from among the acquired at least one additional information, and
transmit the selected additional information to the external device via the communication unit.
